(19) Europäisches Patentamt
European Patent Office
Office européen des brevets

(11) **EP 4 474 439 A1**

(12) **EUROPEAN PATENT APPLICATION**
published in accordance with Art. 153(4) EPC

(43) Date of publication:
**11.12.2024 Bulletin 2024/50**

(21) Application number: **22929905.2**

(22) Date of filing: **30.08.2022**

(51) International Patent Classification (IPC):
***C09D 163/00*** *(2006.01)* ***C09D 201/00*** *(2006.01)*
***C09D 7/61*** *(2018.01)* ***C09D 7/63*** *(2018.01)*
***C09K 3/00*** *(2006.01)*

(52) Cooperative Patent Classification (CPC):
**C09D 7/61; C09D 7/63; C09D 163/00;
C09D 201/00; C09K 3/00**

(86) International application number:
**PCT/JP2022/032654**

(87) International publication number:
**WO 2023/166761 (07.09.2023 Gazette 2023/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.03.2022 JP 2022031578**

(71) Applicant: **Resonac Corporation**
**Tokyo 105-7325 (JP)**

(72) Inventors:
- **YAMANAKA, Takahiro**
  **Tokyo 105-7325 (JP)**
- **KOTAKE, Tomohiko**
  **Tokyo 105-7325 (JP)**
- **SHIMIZU, Mari**
  **Tokyo 105-7325 (JP)**
- **KIKKAWA, Chisato**
  **Tokyo 105-7325 (JP)**
- **FUKUTA, Ryuichiro**
  **Tokyo 105-7325 (JP)**
- **NAKANE, Yuri**
  **Tokyo 105-7325 (JP)**

(74) Representative: **Berggren Oy**
**P.O. Box 16**
**Eteläinen Rautatiekatu 10A**
**00101 Helsinki (FI)**

# (54) ANTI-FOGGING AGENT, ANTI-FOGGING METHOD FOR VEHICLE LAMP STRUCTURE, AND VEHICLE LAMP STRUCTURE

(57) An anti-fogging agent containing silica particles, a binder compound, and a silane coupling agent that is an acid anhydride or a dicarboxylic acid compound. An anti-fogging agent containing a synthetic product A obtained by reacting a silane coupling agent that is an acid anhydride or a dicarboxylic acid compound with a binder compound; and silica particles.

***Fig.1***

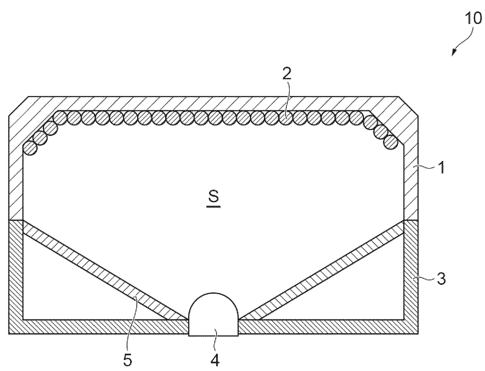


EP 4 474 439 A1

## Description

### Technical Field

The present disclosure relates to an anti-fogging agent, an anti-fogging method for a vehicular lamp structure, and a vehicular lamp structure.

### Background Art

There is known a method for applying an anti-fogging agent composition including a surfactant on the inside of a lamp chamber of a lamp structure for a vehicle such as an automobile, where there is a risk of occurrence of fog due to condensation (see, for example, Patent Literature 1). When water adheres to an anti-fogging film formed by the anti-fogging agent including a surfactant, the water instantly forms a water film due to the effect of the surfactant, and the occurrence of fog is suppressed.

### Citation List

### Patent Literature

Patent Literature 1: Japanese Unexamined Patent Publication No. 2016-027134

### Summary of Invention

### Technical Problem

However, it has been revealed that in the anti-fogging film, water droplets adhered to the anti-fogging film surface or water in the air cause the surfactant in the anti-fogging film to migrate to the water side and the anti-fogging properties of the anti-fogging film may decrease.

An aspect of the present disclosure has been made in consideration of the circumstances, and an object thereof is to provide an anti-fogging agent capable of forming an anti-fogging film excellent in water resistance and moisture resistance.

### Solution to Problem

An aspect of the present disclosure relates to an anti-fogging agent containing silica particles, a binder compound, and a silane coupling agent that is an acid anhydride or a dicarboxylic acid compound.

According to the anti-fogging agent, an anti-fogging film excellent in water resistance and moisture resistance can be formed.

In an embodiment of the anti-fogging agent, the binder compound may be an epoxy compound.

In an aspect of the anti-fogging agent, the silane coupling agent may be a compound represented by the following General Formula (1) or the following General Formula (2).

[Chem. 1]

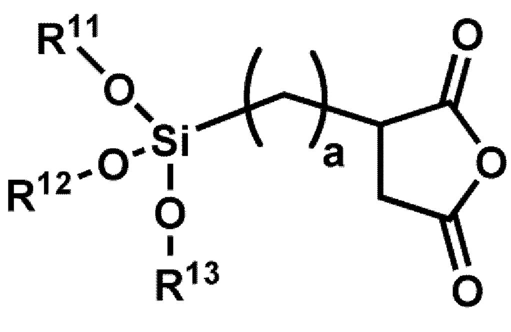

(1)

[In Formula (1), $R^{11}$, $R^{12}$, and $R^{13}$ each independently represent a hydrogen atom or an alkyl group having 1 to 6 carbon atoms, and a represents an integer from 1 to 10.]

[Chem. 2]

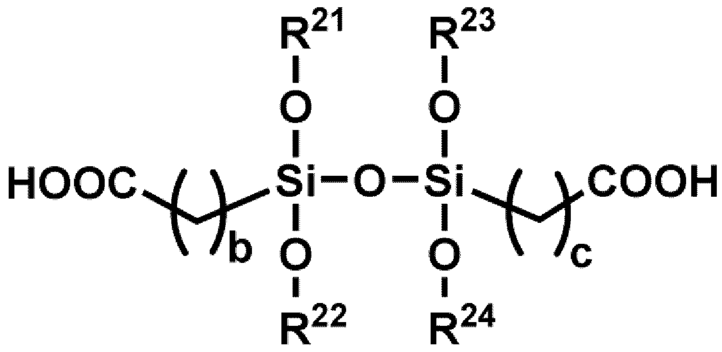

(2)

[In Formula (2), $R^{21}$, $R^{22}$, $R^{23}$, and $R^{24}$ each independently represent a hydrogen atom or an alkyl group having 1 to 6 carbon atoms, and b and c each independently represent an integer from 0 to 10.]

Another aspect of the present disclosure relates to an anti-fogging agent containing a synthetic product A obtained by reacting a silane coupling agent that is an acid anhydride or a dicarboxylic acid compound with a binder compound; and silica particles.

In an aspect of the anti-fogging agent, the binder compound may be an epoxy compound, and the silane coupling agent may be a compound represented by the following General Formula (1) or the following General Formula (2).

[Chem. 3]

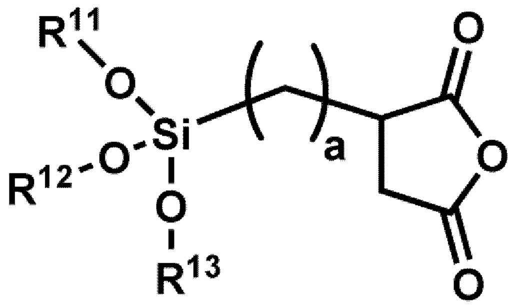

(1)

[In Formula (1), $R^{11}$, $R^{12}$, and $R^{13}$ each independently represent a hydrogen atom or an alkyl group having 1 to 6 carbon atoms, and a represents an integer from 1 to 10.]

[Chem. 4]

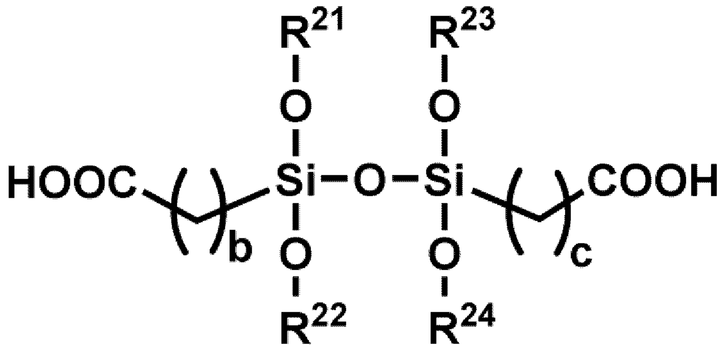

(2)

[In Formula (2), $R^{21}$, $R^{22}$, $R^{23}$, and $R^{24}$ each independently represent a hydrogen atom or an alkyl group having 1 to 6 carbon atoms, and b and c each independently represent an integer from 0 to 10.]

In an aspect of the anti-fogging agent, the synthetic product A may contain a compound represented by the following General Formula (5) or the following General Formula (6).

[Chem. 5]

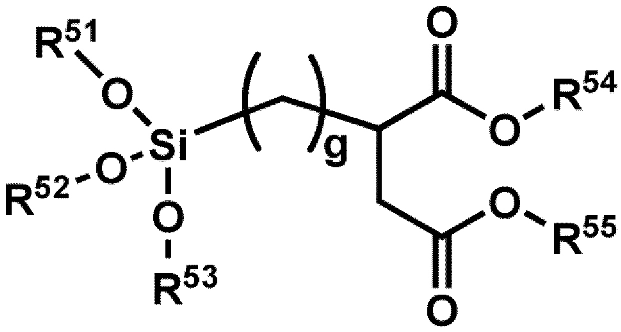

(5)

[In Formula (5), $R^{51}$, $R^{52}$, and $R^{53}$ each independently represent a hydrogen atom or an alkyl group having 1 to 6 carbon atoms, $R^{54}$ and $R^{55}$ each independently represent a hydrogen atom or a monovalent organic group, and g represents an integer from 1 to 10.]

[Chem. 6]

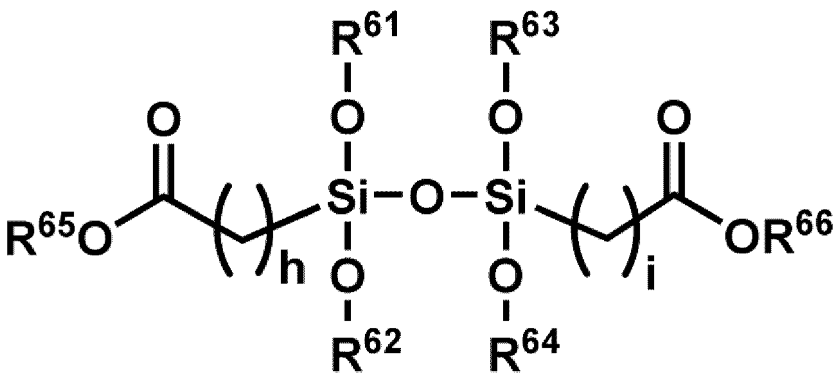

(6)

[In Formula (6), $R^{61}$, $R^{62}$, $R^{63}$, and $R^{64}$ each independently represent a hydrogen atom or an alkyl group having 1 to 6 carbon atoms, $R^{65}$ and $R^{66}$ each independently represent a hydrogen atom or a monovalent organic group, and h and i each independently represent an integer from 0 to 10.]

In an aspect of the anti-fogging agent, a content of the synthetic product A may be 1 to 100 parts by mass with respect to 100 parts by mass of the silica particles.

In an aspect of the anti-fogging agent, the anti-fogging agent may further contain a silane coupling agent having a polyether group.

In an aspect of the anti-fogging agent, the anti-fogging agent may further contain a metal catalyst.

Another aspect of the present disclosure relates to an anti-fogging method for a vehicular lamp structure, including a step of applying the anti-fogging agent to an inner surface of a lens provided in a vehicular lamp structure to form a coating film; and a step of drying the coating film.

According to the anti-fogging method, an anti-fogging film excellent in water resistance and moisture resistance can be formed on the inner surface of a lens.

Still another aspect of the present disclosure relates to a vehicular lamp structure including an anti-fogging film formed from the anti-fogging agent on an inner surface of a lens.

The vehicular lamp structure can have an anti-fogging film excellent in water resistance and moisture resistance on the inner surface of a lens.

**Advantageous Effects of Invention**

According to the present disclosure, it is possible to provide an anti-fogging agent capable of forming an anti-fogging film excellent in water resistance and moisture resistance. According to the present disclosure, it is possible to provide an anti-fogging method for a vehicular lamp structure using an anti-fogging agent, and a vehicular lamp structure including an anti-fogging film excellent in water resistance and moisture resistance.

## Brief Description of Drawings

[FIG. 1] FIG. 1 is a diagram schematically illustrating a vehicular lamp structure.
[FIG. 2] FIG. 2 is a drawing illustrating IR charts of a synthetic product 1 before and after its synthesis.
[FIG. 3] FIG. 3 is a drawing illustrating IR charts of a synthetic product 1 before and after its synthesis.
[FIG. 4] FIG. 4 is a drawing illustrating IR charts of a synthetic product 1 before and after its synthesis.
[FIG. 5] FIG. 5 is a schematic diagram for describing a method for evaluating an anti-fogging agent.
[FIG. 6] FIG. 6 is a schematic diagram for describing a method for evaluating an anti-fogging agent.

## Description of Embodiments

Suitable embodiments of the present disclosure will be described in detail below, with reference to the drawings as necessary. However, the present disclosure is not intended to be limited to the following embodiments. Incidentally, unless particularly stated otherwise, the materials listed as examples below may be used singly, or two or more kinds thereof may be used in combination. The content of each component in the composition means, when a plurality of substances corresponding to each component in the composition are present, the total amount of the plurality of substances present in the composition, unless particularly stated otherwise. A numerical value range expressed using the term "to" represents a range including the numerical values described before and after the term "to" as the minimum value and the maximum value, respectively. With regard to a numerical value range described stepwise in the present specification, the upper limit value or lower limit value in a numerical value range of a certain stage may be replaced with the upper limit value or lower limit value of a numerical value range of another stage. With regard to a numerical value range described in the present specification, the upper limit value or lower limit value of the numerical value range may be replaced with a value shown in the Examples.

<Anti-fogging agent>

An anti-fogging agent of the present embodiment contains silica particles, a binder compound, and a silane coupling agent that is an acid anhydride or a dicarboxylic acid compound. According to the anti-fogging agent of the present embodiment, an anti-fogging film excellent in water resistance and moisture resistance can be formed.

The present inventors presume that the reason why such an effect is achieved is as follows. In other words, as the anti-fogging agent contains a binder compound and a silane coupling agent that is an acid anhydride or a dicarboxylic acid compound together with silica particles, the silica particles and the binder compound can be bonded to each other via the silane coupling agent. It is presumed that this makes it possible to form a firm anti-fogging film.

(Silica particles)

The shape of the silica particles is not particularly limited. Examples of the shape of the silica particles include a bead shape (pearl necklace shape), a chain shape, a spherical shape, a cocoon shape, an associated shape, and a confetti shape. The shape of the silica particles may be a bead shape (pearl necklace shape) or a chain shape from the viewpoint of moisture resistance and water resistance. The silica particles may be colloidal silica.

The silica particles may contain a metal oxide other than silicon dioxide. Examples of the metal oxide include alumina. Examples of such silica particles include colloidal silica in which aluminosilicate is firmly formed on the surface of colloidal silica for stabilizing the silica sol.

The average particle size (average secondary particle size) of the silica particles may be 1 to 1000 nm. As the average particle size is 1 nm or more, the silica particles are less likely to aggregate in the anti-fogging agent, and therefore the silica particles are more likely to come into close contact with the substrate. Meanwhile, as the average particle size is 1000 nm or less, the specific surface area of the silica particles becomes large and the silica particles are more likely to come into close contact with the substrate. From these viewpoints, the average particle size of the silica particles may be 3 to 700 nm, 5 to 500 nm, 10 to 300 nm, or 20 to 200 nm.

The average particle size of the silica particles can be measured, for example, by the following procedure. In other words, about 100 μL (L stands for liters; the same applies below) of the dispersion liquid of the silica particles is weighed and diluted with ion-exchanged water so that the content of the silica particles is about 0.05% by mass (the content at which the transmittance (H) during measurement is 60 to 70%) to obtain a dilute liquid. Next, the dilute liquid is placed in the sample tank of a laser diffraction particle size distribution analyzer (manufactured by HORIBA, Ltd., trade name: LA-920, refractive index: 1.93, light source: He-Ne laser, absorption 0), and the average particle size of the silica particles can be measured.

The number of silanol groups per 1 gram of the silica particles may be $10\times10^{18}$ to $1000\times10^{18}$/g, $50\times10^{18}$ to $800\times10^{18}$/g, or $100\times10^{1g}$ to $700\times10^{18}$/g. As the number of silanol groups per 1 gram of the silica particles is $10\times10^{18}$ /g or more, the number of chemical bonding sites with the functional groups of the substrate increases, and thus close contact properties to the substrate are likely to be improved. Meanwhile, as the number of silanol groups per 1 gram of the silica particles is $1000\times10^{18}$/g or less, the polycondensation reaction between the silica particles during preparation of the anti-fogging agent can be suppressed and a decrease in the number of chemical bonding sites with the functional groups of the substrate can be suppressed.

The number of silanol groups ($\rho$ [groups/g]) of the silica particles can be measured and calculated by the following procedure.

[1] First, 15 g of silica particles are weighed and placed in a container (X [g]) of which the mass has been measured in advance, and dispersed in an appropriate amount of water (100 ml or less). In a case where the silica particles are in the state of a dispersion liquid in which the silica particles are dispersed in a medium such as water, the dispersion liquid is weighed so that the amount of silica particles is 15 g and placed in a container.
[2] The pH is adjusted to 3.0 to 3.5 with 0.1 mol/L hydrochloric acid, the mass (Y [g]) of the container at this time is measured, and the total mass (Y - X [g]) of the liquid is determined.
[3] The liquid is weighed by an amount ((Y - X)/10 [g]) to be 1/10 of the mass obtained in [2] above and placed in a separate container. At this stage, the silica particles (A [g]) contained in the liquid are 1.5 g.
[4] Sodium chloride is added to the weighed liquid by 30 g, and ultrapure water is further added to make the total amount 150 g. The pH of this solution is adjusted to 4.0 with a 0.1 mol/L sodium hydroxide solution to prepare a sample for titration.
[5] To the sample for titration, 0.1 mol/L sodium hydroxide is added dropwise until the pH reaches 9.0, and the amount of sodium hydroxide (B [mol]) required to change the pH from 4.0 to 9.0 is determined.
[6] The number of silanol groups of the silica particles is calculated using the following Equation (1A).

$$\rho = B \cdot N_A / A \cdot S_{BET} \ldots (1A)$$

(In Equation (1A), NA [pieces/mol] represents Avogadro's number. $S_{BET}$ [$m^2$/g] represents the BET specific surface area of silica particles.)

The BET specific surface area $S_{BET}$ of silica particles is determined according to the BET specific surface area method. As a specific measurement method, for example, silica particles are placed in a dryer and dried at 150°C, then placed in a measurement cell and subjected to vacuum degassing at 120°C for 60 minutes to prepare a sample, and the BET specific surface area $S_{BET}$ of silica particles can be determined by adsorbing nitrogen gas to the sample using a BET specific surface area measuring instrument. More specifically, first, silica particles dried at 150°C are crushed finely in a mortar (porcelain, 100 ml) and placed in a measurement cell as a sample for measurement, and the BET specific surface area $S_{BET}$ is measured using a BET specific surface area measuring instrument (product name NOVE-1200) manufactured by Yuasa Ionics Co., Ltd.

The degree of association of the silica particles in the dispersion liquid of the silica particles may be, for example, 5.0 or less, 4.0 or less, 3.0 or less, 2.5 or less, or 2.0 or less. When the degree of association of the silica particles is 5.0 or less, the specific surface area of the silica particles is adequately large, and therefore, the close contact properties to the substrate are improved. Silica particles having such a degree of association are readily available. The degree of association of the silica particles may be 1.0 or more, 1.3 or more, or 1.5 or more. When the degree of association of the silica particles is 1.0 or more, the specific surface area of the silica particles is adequately small, and therefore, aggregation of the silica particles can be suppressed during preparation of the anti-fogging agent.

The degree of association of the silica particles means the ratio (average particle size/biaxial average primary particle size) of the average particle size (average secondary particle size) of the silica particles in a dispersion liquid of the silica particles to the biaxial average primary particle size of the silica particles. The biaxial average primary particle size of the silica particles can be measured, for example, using a known transmission electron microscope (for example, trade name: H-7100FA, manufactured by Hitachi High-Tech Corporation). Specifically, the biaxial average primary particle size of the silica particles is calculated by taking an image of the silica particles using a transmission electron microscope, calculating the biaxial average primary particle size of 20 silica particles, and averaging the values for the 20 silica particles.

The silica particles are available as a dispersion liquid of silica particles. Examples of the dispersing medium include water, isopropyl alcohol, 1-methoxy-2-propyl alcohol, ethyl alcohol, methyl alcohol, ethylene glycol, ethylene glycol-n-propyl ether, propylene glycol monomethyl ether, propylene glycol monomethyl ether acetate, dimethylacetamide, N-methylpyrrolidone, toluene, methyl ethyl ketone, methyl isobutyl ketone, cyclohexane, and ethyl acetate. The dispersing medium may be a liquid mixture of the dispersing media. The dispersing medium for the silica particles may be water from the viewpoint of versatility.

The pH of the dispersion liquid of the silica particles may be 2 to 10, 4 to 9, 6 to 8, or 2 to 5. As the pH is 2 to 10, in a case where an alkoxy group is present on the surface of the silica particles, the hydrolysis reaction rate thereof slows down, thus the silica particles of which the alkoxy groups remain are likely to be formed into an anti-fogging film, the polycondensation reaction of silanol groups caused by moisture absorption can be suppressed, and this makes it easier to maintain the anti-fogging properties (hydrophilicity) of the film surface.

The pH of the dispersion liquid of silica particles can be measured with a pH meter (for example, manufactured by Denki Kagaku Keiki Co., Ltd., product No.: PHL-40). Regarding the measured value of pH, three-point calibration is performed by using standard buffer solutions (phthalate pH buffer solution pH: 4.01 (25°C), neutral phosphate pH buffer solution pH: 6.86 (25°C), or borate pH buffer solution pH: 9.18 (25°C)), subsequently the electrode is placed in a dispersion liquid, and a value obtained after stabilization after a lapse of 2 minutes or longer is adopted.

The zeta potential of the silica particles in the dispersion liquid may be -50 to 40 mV or may be -50 to -11 mV or 11 to 40 mV. As the zeta potential of the silica particles is -50 to -11 mV or 11 to 40 mV, the silica particles are likely to repel each other in the dispersion liquid, aggregation of the silica particles is likely to be suppressed, and the anti-fogging properties are improved when the anti-fogging agent is applied to a substrate.

The zeta potential of the silica particles can be measured using a zeta potential meter (for example, model number: Coulter Delsa 440, manufactured by Beckman Coulter, Inc.). As the method for measuring the zeta potential, pure water is added to the dispersion liquid of the silica particles so that the concentration of the silica particles is 5 ppm based on the total amount of the test liquid, and ultrasonic treatment is performed to prepare a test liquid in which the silica particles are dispersed. Next, the test liquid is placed in a measurement cell with platinum electrodes attached to both sides, and a voltage of 10 V is applied to both electrodes so that the charged silica particles migrate to the electrode side having the opposite polarity to the charge of the silica particles. The zeta potential of the silica particles can be calculated from the migration velocity of the charged silica particles.

The raw material for the silica particles may be water glass or an alkoxysilane. In a case where the raw material is water glass, as the step of producing silica particles, for example, the silica particles are produced by heating and concentrating sodium silicate by a hydrothermal synthesis method. Specifically, the silica particles may be produced by producing aggregates having a three-dimensional network structure in a state where the growth of primary particles is suppressed at an acidic pH, and then crushing the aggregates. Alternatively, the silica particles may be produced by accelerating the growth of primary particles at an alkaline pH to produce block-like aggregates, and then crushing the aggregates. In a case where the raw material is an alkoxysilane, as the step of producing silica particles, for example, the silica particles are produced by sol-gel synthesis of the alkoxysilane. Specifically, the silica particles may be produced by accelerating the hydrolysis reaction of the alkoxysilane, then accelerating the polycondensation reaction to obtain a gel, and then removing the solvent by heat treatment, or the silica particles may be produced by obtaining a gel and then replacing the solvent with a predetermined solvent.

As the dispersion liquid of the silica particles, a commercially available product may be used, and examples thereof include ST-PS-SO, ST-PS-MO, ST-PS-M, ST-PS-S, ST-UP, ST-OUP, IPA-ST-UP, MA-ST-UP, PGM-ST-UP, MEK-ST-UP, IPA-ST, IPA-ST-L, IPA-ST-ZL, MA-ST-M, MA-ST-L, MA-ST-ZL, EG-ST, EG-ST-XL-30, NPC-ST-30, PGM-ST, DMAC-ST, DMAC-ST-ZL, NMP-ST, TOL-ST, MEK-ST-40, MEK-ST-L, MEK-ST-ZL, MIBK-ST, MIBK-ST-L, CHO-ST-M, EAC-ST, PMA-ST, MEK-EC-2130Y, MEK-EC-2430Z, MEK-EC-2140Z, MEK-AC-4130Z, MEK-AC-5140Z, PGM-AC-2140Y, PGM-AC-4130Y, MIBK-AC-2140Z, MIBK-SD-L, ST-XS, ST-OXS, ST-NXS, ST-CXS, ST-S, ST-OS, ST-NS, ST-30, ST-O, ST-N, ST-C, ST-AK, ST-50-T, ST-O-40, ST-N-40, ST-CM, ST-30L, ST-OL, ST-AK-L, ST-YL, ST-OYL, ST-AK-YL, ST-ZL, MP-1040, MP-2040, and MP-4540M manufactured by Nissan Chemical Corporation; PL-1-IPA, PL-1-TOL, PL-2L-PGME, PL-2L-MEK, PL-2L, PL-3, PL-4, PL-5, PL-1H, PL-3H, PL-5H, BS-2L, BS-3L, BS-5L, HL-2L, HL-3L, HL-4L, PL-3-C, and PL-3-D manufactured by FUSO CHEMICAL Co., Ltd.; TCSOL800 manufactured by TAMA CHEMICALS CO., LTD.; and SI-40, SI-50, SI-45P, SI-80P, SIK-23, S-30H, SIK-15, and SI-550 manufactured by JGC Catalysts and Chemicals Ltd.

The content of the silica particles may be 0.5% by mass or more, 1% by mass or more, 1.5% by mass or more, 2% by mass or more, or 3% by mass or more based on the total amount of solids in the anti-fogging agent from the viewpoint of excellent anti-fogging properties. The content of the silica particles may be 20% by mass or less, 17% by mass or less, 15% by mass or less, 13% by mass or less, or 10% by mass or less based on the total amount of solids in the anti-fogging agent from the viewpoint that the polycondensation reaction of silanol groups between the silica particles is suppressed and anti-fogging properties (hydrophilicity) are likely to be maintained. From these points of view, the content of the silica particles may be 0.5% to 20% by mass, 1.5% to 15% by mass, or 3% to 10% by mass based on the total amount of solids in the anti-fogging agent.

(Binder compound)

In the present specification, the binder compound refers to a compound that improves the strength of the anti-fogging film by bonding to the silica particles and crosslinking the silica particles. In the present embodiment, the binder

compound may have one or two or more functional groups capable of reacting with an acid anhydride group or a carboxyl group in the molecule, or may bond to the silica particles via a silane coupling agent. Examples of the binder compound include an epoxy compound, polyvinyl alcohol, modified polyvinyl alcohol, a poly(meth)acrylic acid compound, a (meth) acrylic resin, an epoxy resin, a urethane resin, polyvinylpyrrolidone, a polyvinylpyrrolidone-vinyl acetate copolymer (vinyl acetate pyrrolidone copolymer), a polyamine-based resin, cellulose, dextrin, cellulose nanofibers, a silicate oligomer, and a silicate polymer. The binder compound may be used singly or in combination of two or more kinds.

The binder compound may be an epoxy compound from the viewpoint of excellent fogging resistance of the anti-fogging film. Examples of the epoxy compound include polyfunctional epoxy compounds such as ethylene glycol diglycidyl ether, diethylene glycol diglycidyl ether, polyethylene glycol diglycidyl ether, propylene glycol diglycidyl ether, polypropylene glycol diglycidyl ether.

Examples of the poly(meth)acrylic acid compound include compounds having structures derived from monomers such as (meth)acrylic acid monomers having an amide group, such as (meth)acrylamide, N-methylacrylamide, N,N-dimethyl(meth)acrylamide, N-ethyl(meth)acrylamide, N,N-diethyl(meth)acrylamide, N-n-propyl(meth)acrylamide, N-isopropyl(meth)acrylamide, N-methylol(meth)acrylamide, N-methoxymethyl (meth)acrylamide, N-propoxymethyl (meth) acrylamide, and N-butoxymethyl(meth)acrylamide; (meth)acrylic acid monomers having an oxyalkylene group, such as methoxypolyethyleneglycol (meth)acrylate, ethoxypolyethyleneglycol (meth)acrylate, and propoxy polyethylene glycol (meth)acrylate; (meth)acrylic acid monomers having an alkyl group, such as methyl (meth)acrylate, ethyl (meth)acrylate, propyl (meth)acrylate, isopropyl (meth)acrylate, butyl (meth)acrylate, isobutyl (meth)acrylate and tertiary butyl (meth)acrylate; and (meth)acrylic acid monomers having a hydroxy group, such as 2-hydroxyethyl (meth)acrylate. The poly(meth)acrylic acid compound may have a structure derived from a monomer such as N-(meth)acryloylmorpholine or acrylonitrile. The poly(meth)acrylic acid compound may be a block copolymer or a graft copolymer.

Examples of the silane oligomer include ethyl silicate 40, ethyl silicate 48, EMS-485, methyl silicate 51, methyl silicate 53A, Colcoat PX, and Colcoat N-103X (all manufactured by COLCOAT CO., LTD.).

The content of the binder compound may be 0.1 to 1000 parts by mass, 0.5 to 500 parts by mass, or 1 to 100 parts by mass with respect to 100 parts by mass of the silica particles from the viewpoint of superior water resistance and moisture resistance of the anti-fogging film.

The content of the binder compound may be 1% to 30% by mass, 3% to 20% by mass, or 5% to 10% by mass based on the total amount of solids in the anti-fogging agent from the viewpoint of superior water resistance and moisture resistance of the anti-fogging film.

(Silane coupling agent)

The anti-fogging agent contains a silane coupling agent that is an acid anhydride or a dicarboxylic acid compound (hereinafter, this silane coupling agent will also be referred to as "silane coupling agent A"). In other words, the anti-fogging agent contains a silane coupling agent having an acid anhydride group or two carboxy groups. The silane coupling agent A may be used singly or in combination of two or more kinds.

The silane coupling agent that is an acid anhydride may be, for example, a silane coupling agent represented by General Formula (1).

[Chem. 7]

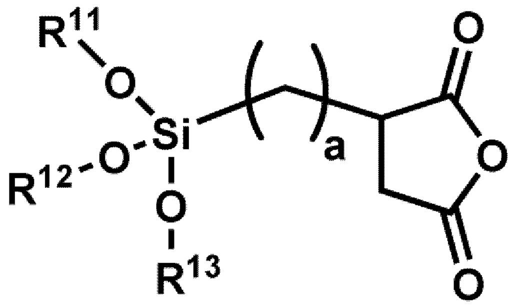

(1)

In Formula (1), $R^{11}$, $R^{12}$, and $R^{13}$ each independently represent a hydrogen atom or an alkyl group having 1 to 6 carbon atoms, and a represents an integer from 1 to 10.

In Formula (1), $R^{11}$, $R^{12}$, and $R^{13}$ may be a hydrogen atom, a methyl group, an ethyl group, a propyl group, or a butyl group. a may be an integer from 1 to 8, from 1 to 5, or from 1 to 3.

The silane coupling agent that is a dicarboxylic acid compound may be, for example, a silane coupling agent represented by General Formula (2).

[Chem. 8]

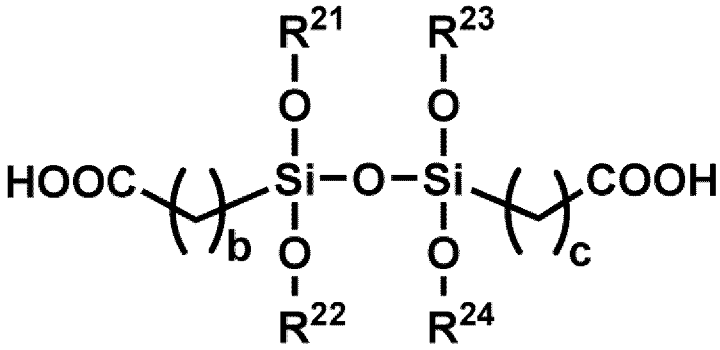

(2)

In Formula (2), $R^{21}$, $R^{22}$, $R^{23}$, and $R^{24}$ each independently represent a hydrogen atom or an alkyl group having 1 to 6 carbon atoms, and b and c each independently represent an integer from 0 to 10.

In Formula (2), $R^{21}$, $R^{22}$, $R^{23}$, and $R^{24}$ may be a hydrogen atom, a methyl group, or an ethyl group. b and c may each independently be an integer from 0 to 8, from 0 to 5, or from 0 to 3.

The content of the silane coupling agent A may be 1 part by mass or more, 5 parts by mass or more, 10 parts by mass or more, or 14 parts by mass or more or may be 200 parts by mass or less, 100 parts by mass or less, 50 parts by mass or less, 30 parts by mass or less, or 15 parts by mass or less with respect to 100 parts by mass of the binder compound from the viewpoint of superior water resistance and moisture resistance of the anti-fogging film. The content of the silane coupling agent A may be 1 to 200 parts by mass or 10 to 30 parts by mass with respect to 100 parts by mass of the binder compound.

The content of the silane coupling agent A may be 0.1 parts by mass or more, 0.5 parts by mass or more, 1 part by mass or more, or 1.4 parts by mass or more or may be 20 parts by mass or less, 10 parts by mass or less, 5 parts by mass or less, 3 parts by mass or less, or 1.5 parts by mass or less with respect to 100 parts by mass of the silica particles from the viewpoint of superior water resistance and moisture resistance of the anti-fogging film. The content of the silane coupling agent A may be 0.1 to 20 parts by mass or 1 to 3 parts by mass with respect to 100 parts by mass of the silica particles.

The content of the silane coupling agent A may be 0.1% by mass or more, 0.5% by mass or more, 0.8% by mass or more, or 1% by mass or more or may be 20% by mass or less, 10% by mass or less, 5% by mass or less, 3% by mass or less, or 1.2% by mass or less based on the total amount of solids in the anti-fogging agent from the viewpoint of superior water resistance and moisture resistance of the anti-fogging film. The content of the silane coupling agent A may be 0.1% to 20% by mass or 0.8% to 3% by mass based on the total amount of solids in the anti-fogging agent.

In a case where a plurality of substances among acid anhydrides and dicarboxylic acid compounds are used as the silane coupling agent A, the total content of these may satisfy the conditions described above.

The anti-fogging agent may further contain a silane coupling agent (namely, a silane coupling agent other than the silane coupling agent A. Hereinafter, this silane coupling agent will also be referred to as "silane coupling agent B".) other than the silane coupling agent that is an acid anhydride and the silane coupling agent that is a dicarboxylic acid compound. The silane coupling agent B can be used singly or in combination of two or more kinds.

The silane coupling agent B may be, for example, a compound represented by General Formula (3).

[Chem. 9]

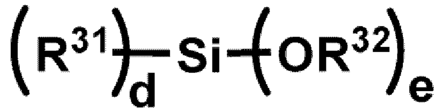

(3)

In Formula (3), $R^{31}$ represents a monovalent organic group, $R^{32}$ represents an alkyl group having 1 to 3 carbon atoms, d represents an integer from 0 to 2, e represents an integer from 1 to 3, and d + e = 4.

In Formula (3), in a case where e is 2 or more, a plurality of $R^{32}$'s may be the same as or different from each other.

Examples of $R^{31}$ include a C1 to C30 branched or linear alkyl group, an alkenyl group, a C3 to C10 cycloalkyl group, a C6 to C10 aryl group, an epoxy group, an acryloyl group, a methacryloyl group, an amino group, a ureido group, an isocyanate group, an isocyanurate group, a mercapto group, and a fluoro group.

Examples of the silane coupling agent having a C1-C30 branched or linear alkyl group include methyltrimethoxysilane (KBM-13 manufactured by Shin-Etsu Chemical Co., Ltd., and the like), ethyltrimethoxysilane, propyltrimethoxysilane (KBM-3033 manufactured by Shin-Etsu Chemical Co., Ltd., and the like), butyltrimethoxysilane, pentyltrimethoxysilane, hexyltrimethoxysilane (KBM-3063 manufactured by Shin-Etsu Chemical Co., Ltd., and the like), heptyltrimethoxysilane, octyltrimethoxysilane, nonyltrimethoxysilane, decyltrimethoxysilane (KBM-3103C manufactured by Shin-Etsu Chemical Co., Ltd., and the like), undecyltrimethoxysilane, dodecyltrimethoxysilane, tetradecyltrimethoxysilane, stearyltrimethoxysilane, methyltriethoxysilane (KBE-13 manufactured by Shin-Etsu Chemical Co., Ltd., and the like), ethyltriethoxysilane, propyltriethoxysilane (KBE-3033 manufactured by Shin-Etsu Chemical Co., Ltd., and the like), butyltriethoxysilane, pentyltriethoxysilane, hexyltriethoxysilane (KBE-3063 manufactured by Shin-Etsu Chemical Co., Ltd., and the like), heptyltriethoxysilane, octyltriethoxysilane (KBE-3083 manufactured by Shin-Etsu Chemical Co., Ltd., and the like), nonyltriethoxysilane, decyltriethoxysilane, undecyltriethoxysilane, dodecyltriethoxysilane, tetradecyltriethoxysilane, and stearyltriethoxysilane.

Examples of the silane coupling agent having an alkenyl group include vinyltrimethoxysilane (KBM-1003 manufactured by Shin-Etsu Chemical Co., Ltd., and the like), vinyltriethoxysilane (KBE-1003 manufactured by Shin-Etsu Chemical Co., Ltd., and the like), allyltrimethoxysilane, and allyltriethoxysilane.

Examples of the silane coupling agent having a C6-C10 aryl group include phenyltrimethoxysilane (KBM-103, KBM-202SS, KBE-103, KBE-202 manufactured by Shin-Etsu Chemical Co., Ltd., and the like), and p-styryltrimethoxysilane (KBM-1403 manufactured by Shin-Etsu Chemical Co., Ltd., and the like).

Examples of the silane coupling agent having an epoxy group include 3-glycidyloxypropyltrimethoxysilane (KBM-403 manufactured by Shin-Etsu Chemical Co., Ltd., and the like), 8-glycidoxyoctyltrimethoxysilane (KBM-4803 manufactured by Shin-Etsu Chemical Co., Ltd., and the like), 3-glycidyloxypropyltriethoxysilane (KBE-403 manufactured by Shin-Etsu Chemical Co., Ltd., and the like), KBE-402, X-12-981S, and X-12-984S (all trade names, manufactured by Shin-Etsu Chemical Co., Ltd.).

Examples of the silane coupling agent having an acryloyl group include 3-acryloxypropyltrimethoxysilane (KBM-5103 manufactured by Shin-Etsu Chemical Co., Ltd., and the like), X-12-1048, and X-12 -1050 (all trade names, manufactured by Shin-Etsu Chemical Co., Ltd.).

Examples of the silane coupling agent having a methacryloyl group include 3-methacryloxypropyltrimethoxysilane (KBM-503 manufactured by Shin-Etsu Chemical Co., Ltd., and the like), 8-methacryloxyoctyltrimethoxysilane (KBM-5803 manufactured by Shin-Etsu Chemical Co., Ltd., and the like), 3-methacryloxypropyltriethoxysilane (KBE-503 manufactured by Shin-Etsu Chemical Co., Ltd., and the like), 3-methacryloxypropylmethyldimethoxysilane (KBM-502 manufactured by Shin-Etsu Chemical Co., Ltd., and the like), and 3-methacryloxypropylmethyldiethoxysilane (KBE-502 manufactured by Shin-Etsu Chemical Co., Ltd., and the like).

Examples of the silane coupling agent having an amino group include 3-aminopropyltrimethoxysilane (KBM-903 manufactured by Shin-Etsu Chemical Co., Ltd., and the like), 3-aminopropyltriethoxysilane (KBE-903 manufactured by Shin-Etsu Chemical Co., Ltd., and the like), N-2-(aminoethyl)-3-aminopropyltrimethoxysilane (KBM-603 manufactured by Shin-Etsu Chemical Co., Ltd., and the like), N-2-(aminoethyl)-8-aminooctyltrimethoxysilane (KBM-6803 manufactured by Shin-Etsu Chemical Co., Ltd., and the like), N-2-(aminoethyl)-3-aminopropyltriethoxysilane (KBE-603 manufactured by Shin-Etsu Chemical Co., Ltd., and the like), N-phenyl-3-aminopropyltrimethoxysilane (KBM-573 manufactured by Shin-Etsu Chemical Co., Ltd., and the like), N-2-(aminoethyl)-3-aminopropylmethyldimethoxysilane (KBM-602 manufactured by Shin-Etsu Chemical Co., Ltd., and the like), N-2-(aminoethyl)-3-aminopropylmethyldiethoxysilane (KBE-602 manufactured by Shin-Etsu Chemical Co., Ltd., and the like), N-(vinylbenzyl)-2-aminoethyl-3-aminopropyltrimethoxysilane (KBM-575 manufactured by Shin-Etsu Chemical Co., Ltd., and the like), 3-triethoxysilyl-N-(1,3-dimethylbutylidene) propylamine (KBE-9103P manufactured by Shin-Etsu Chemical Co., Ltd., and the like), and X-12-972F (trade name, manufactured by Shin-Etsu Chemical Co., Ltd.).

Examples of the silane coupling agent having a ureido group include 3-ureidopropyltriethoxysilane (KBE-585A manufactured by Shin-Etsu Chemical Co., Ltd., and the like).

Examples of the silane coupling agent having an isocyanate group include 3-isocyanatopropyltriethoxysilane (KBE-9007 manufactured by Shin-Etsu Chemical Co., Ltd., and the like) and X-12-1159L (trade name, manufactured by Shin-Etsu Chemical Co., Ltd.).

Examples of the silane coupling agent having an isocyanurate group include tris(3-trimethoxysilylpropyl) isocyanurate (KBM-9659 manufactured by Shin-Etsu Chemical Co., Ltd., and the like).

Examples of the silane coupling agent having a mercapto group include 3-mercaptopropyltrimethoxysilane (KBM-803 manufactured by Shin-Etsu Chemical Co., Ltd., and the like), 3-mercaptopropylmethyldimethoxysilane (KBM-802 manufactured by Shin-Etsu Chemical Co., Ltd., and the like), X-12-1154, and X-12-1156 (trade names, manufactured by Shin-Etsu Chemical Co., Ltd.).

Examples of the silane coupling agent having a fluoro group include 3,3,3-trifluoropropyltrimethoxysilane (KBM-7103 manufactured by Shin-Etsu Chemical Co., Ltd., and the like).

The silane coupling agent B may be a silane coupling agent having a polyether group, or may be a compound represented by General Formula (4).

[Chem. 10]

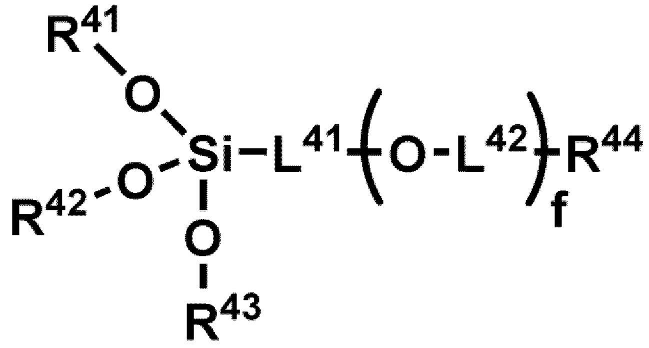

(4)

In Formula (4), $R^{41}$, $R^{42}$, $R^{43}$, and $R^{44}$ each independently represent a hydrogen atom or an alkyl group having 1 to 6 carbon atoms, $L^{41}$ and $L^{42}$ each independently represent an alkylene group having 1 to 6 carbon atoms, and f represents an integer from 3 to 25.

$R^{41}$, $R^{42}$, $R^{43}$, and $R^{44}$ may be a methyl group, an ethyl group, a propyl group, or a butyl group. $L^{41}$ and $L^{42}$ may be an ethylene group, a propylene group, or a butylene group. f may be 10 to 20 or may be 11 to 15.

Examples of the polyether silane represented by General Formula (4) include A1230 (manufactured by Momentive Performance Materials LLC) and X-12-641 (manufactured by Shin-Etsu Chemical Co., Ltd.)

The content of the silane coupling agent B may be 10 parts by mass or more, 30 parts by mass or more, 50 parts by mass or more, or 80 parts by mass or more or may be 500 parts by mass or less, 400 parts by mass or less, 300 parts by mass or less, or 200 parts by mass or less with respect to 100 parts by mass of the binder compound from the viewpoint of excellent fogging resistance of the anti-fogging film. The content of the silane coupling agent B may be 10 to 500 parts by mass or 50 to 300 parts by mass with respect to 100 parts by mass of the binder compound.

The content of the silane coupling agent B may be 1 part by mass or more, 3 parts by mass or more, 5 parts by mass or more, or 8 parts by mass or more or may be 50 parts by mass or less, 40 parts by mass or less, 30 parts by mass or less, or 20 parts by mass or less with respect to 100 parts by mass of the silica particles from the viewpoint of excellent fogging resistance of the anti-fogging film. The content of the silane coupling agent B may be 1 to 50 parts by mass or 5 to 30 parts by mass with respect to 100 parts by mass of the silica particles.

The content of the silane coupling agent B may be 1% by mass or more, 3% by mass or more, 5% by mass or more, or 7% by mass or more or may be 30% by mass or less, 20% by mass or less, 15% by mass or less, or 10% by mass or less based on the total amount of solids in the anti-fogging agent from the viewpoint of excellent fogging resistance of the anti-fogging film. The content of the silane coupling agent B may be 1% to 30% by mass or 5% to 15% by mass based on the total amount of solids in the anti-fogging agent.

(Synthetic product A)

In the anti-fogging agent, the binder compound and the silane coupling agent that is an acid anhydride or a dicarboxylic acid compound may be reacted in advance before being mixed with other components to produce a synthetic product of the binder compound and the silane coupling agent that is an acid anhydride or a dicarboxylic acid compound (hereinafter, this synthetic product may also be referred to as "synthetic product A"). In other words, another embodiment of the present disclosure is an anti-fogging agent containing a synthetic product A obtained by reacting a silane coupling agent that is an acid anhydride or a dicarboxylic acid compound with a binder compound; and silica particles. As the binder compound and the silane coupling agent that is an acid anhydride or a dicarboxylic acid compound, the compounds described above can be used. The anti-fogging agent may contain, together with the synthetic product A, a binder compound and a silane coupling agent that is an acid anhydride or a dicarboxylic acid compound.

In a case where the anti-fogging agent contains the synthetic product A, the water resistance and moisture resistance of the anti-fogging film formed from the anti-fogging agent are further improved compared to a case where the anti-fogging agent contains a binder compound and a silane coupling agent that is an acid anhydride or a dicarboxylic acid compound without reacting these compounds in advance. The present inventors presume that the reason for this is as follows. In other words, it is presumed that as a binder compound and a silane coupling agent that is an acid anhydride or a dicarboxylic acid compound are reacted in advance to produce a synthetic product and then the synthetic product is contained in the anti-fogging agent, the number of reactions required to bond the silica particles to each other decreases or remaining of the unreacted binder compound can be suppressed compared to when these compounds are contained without being reacted in advance, thus silica particles are more likely to be bonded to each other, and the water resistance

and moisture resistance of the anti-fogging film can be further improved.

The structure of the synthetic product A is determined depending on the kind of binder compound and the kind of silane coupling agent. The synthetic product A may contain, for example, a compound represented by General Formula (5) or General Formula (6). The synthetic product A may contain a condensate of the compound represented by General Formula (5), may contain a condensate of the compound represented by General Formula (6), or may contain a condensate of the compound represented by General Formula (5) or (6) and a silane coupling agent that is an acid anhydride or a dicarboxylic acid compound.

[Chem. 11]

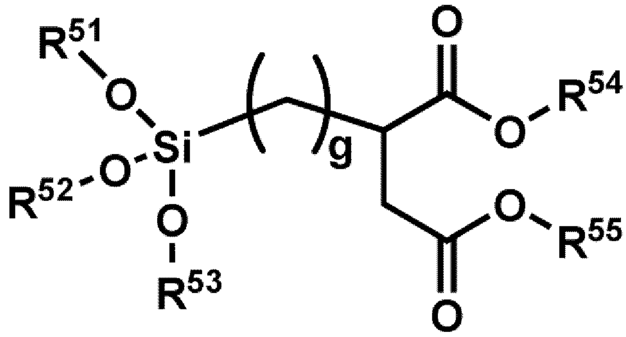

(5)

In Formula (5), $R^{51}$, $R^{52}$, and $R^{53}$ each independently represent a hydrogen atom or an alkyl group having 1 to 6 carbon atoms, $R^{54}$ and $R^{55}$ each independently represent a hydrogen atom or a monovalent organic group, and g represents an integer from 1 to 10.

In Formula (5), $R^{51}$, $R^{52}$, and $R^{53}$ may each independently be a hydrogen atom, a methyl group, or an ethyl group. $R^{54}$ and $R^{55}$ may each independently be a hydrogen atom or a structure represented by General Formula (7). g may be an integer from 1 to 8, from 1 to 5, or from 1 to 3.

[Chem. 12]

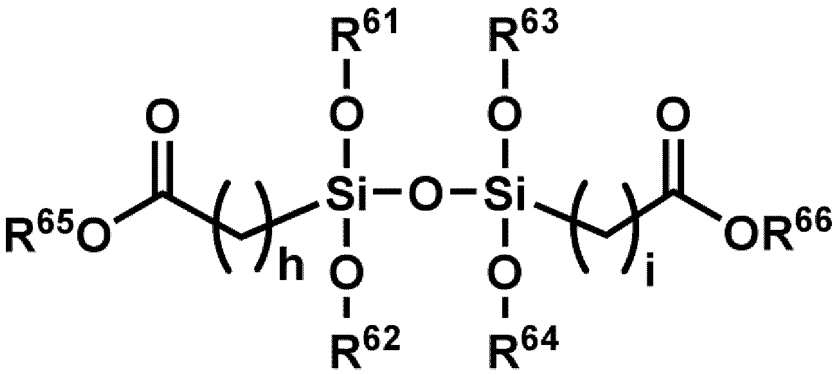

(6)

In Formula (6), $R^{61}$, $R^{62}$, $R^{63}$, and $R^{64}$ each independently represent a hydrogen atom or an alkyl group having 1 to 6 carbon atoms, $R^{65}$ and $R^{66}$ each independently represent a hydrogen atom or a monovalent organic group, and h and i each independently represent an integer from 0 to 10.

In Formula (6), $R^{61}$, $R^{62}$, $R^{61}$, and $R^{64}$ may each independently be a hydrogen atom, a methyl group, or an ethyl group. $R^{65}$ and $R^{66}$ may each independently be a hydrogen atom or a structure derived from a binder compound. h and i may each independently be an integer from 0 to 8, from 0 to 5, or from 0 to 3.

In a case where the binder compound is an epoxy compound, $R^{65}$ and $R^{66}$ may each be a hydrogen atom or a structure derived from an epoxy compound. In a case where $R^{65}$ and/or $R^{66}$ is a structure derived from an epoxy compound, $R^{65}$ and/or $R^{66}$ may be a structure having an ethylene glycol chain, a propylene glycol chain, a sorbitol chain, or a glycerol chain, or may be a structure having an epoxy group, a glycidyl group, or a diol group.

The synthetic product A can be produced, for example, by stirring the binder compound and the silane coupling agent A in an environment of 40 to 80°C for 0.5 to 24 hours. As the mixing ratio of the binder compound to the silane coupling agent A, the silane coupling agent A may be 1 to 200 parts by mass or 10 to 30 parts by mass with respect to 100

parts by mass of the binder compound. The conditions during synthesis of the synthetic product A can be adjusted, for example, by the change in the peak position that can be found in the IR chart. Specifically, in a case where the silane coupling agent A is an acid anhydride, the progress of the synthesis reaction can be verified by the disappearance of peaks at 1780 $cm^{-1}$ and 1850 $cm^{-1}$, which are the peaks attributed to an acid anhydride group, in the IR chart before synthesis in the IR chart after synthesis. The production of a compound having an ester group can be verified by the appearance of a peak at 1735 $cm^{-1}$ in the IR chart after synthesis. In a case where the binder compound is an epoxy compound, the progress of the synthesis reaction can be verified by the decrease in the peak at 910 $cm^{-1}$ that is a peak attributed to an epoxy group, which can be found in the IR chart before synthesis.

The content of the synthetic product A may be 1 part by mass or more, 3 parts by mass or more, 5 parts by mass or more, or 10 parts by mass or more or may be 100 parts by mass or less, 80 parts by mass or less, 60 parts by mass or less, or 50 parts by mass or less with respect to 100 parts by mass of the silica particles from the viewpoint of superior water resistance and moisture resistance of the anti-fogging film. The content of the synthetic product A may be 1 to 100 parts by mass or 5 to 60 parts by mass with respect to 100 parts by mass of the silica particles.

The content of the synthetic product A may be 10 parts by mass or more, 30 parts by mass or more, 50 parts by mass or more, or 100 parts by mass or more or may be 1000 parts by mass or less, 500 parts by mass or less, 300 parts by mass or less, or 200 parts by mass or less with respect to 100 parts by mass of the silane coupling agent B from the viewpoint of superior water resistance and moisture resistance of the anti-fogging film. The content of the synthetic product A may be 10 to 1000 parts by mass or 50 to 300 parts by mass with respect to 100 parts by mass of the silane coupling agent B.

The content of the synthetic product A may be 1% by mass or more, 3% by mass or more, 5% by mass or more, or 8% by mass or more or may be 40% by mass or less, 30% by mass or less, 28% by mass or less, or 25% by mass or less based on the total amount of solids in the anti-fogging agent from the viewpoint of superior water resistance and moisture resistance of the anti-fogging film. The content of the synthetic product A may be 1% to 40% by mass or 5% to 28% by mass based on the total amount of solids in the anti-fogging agent.

(Liquid medium)

The anti-fogging agent may contain a liquid medium. The liquid medium may be a medium that disperses the silica particles in the anti-fogging agent, dissolves the binder compound and the silane coupling agent, and the like. The boiling point of the liquid medium may be 185°C or less from the viewpoint that the liquid medium evaporates by heating during the formation of the anti-fogging film, the silica particles come close to each other, and bonding between the silica particles is likely to be formed. The liquid medium may be the same as the dispersing medium contained in the dispersion liquid of the silica particles, or may be different from the dispersing medium.

As the liquid medium, for example, water, an organic solvent, or a mixed solvent thereof can be used. Examples of the organic solvent include alcohols such as methyl alcohol, ethyl alcohol, 1-propanol, isopropyl alcohol, 1-butyl alcohol, 2-butyl alcohol, isobutyl alcohol, diacetone alcohol, 1-butoxy-2-propanol, 1-hexanol, 1-octanol, 2-octanol, and 3-methoxy-3-methyl-1-butanol; glycols such as polyethylene glycol; glycol ethers such as ethylene glycol monomethyl ether, ethylene glycol monoethyl ether, ethylene glycol monopropyl ether, ethylene glycol monobutyl ether, ethylene glycol mono-tert-butyl ether, propylene glycol monomethyl ether acetate, propylene glycol n-propyl ether and propylene glycol monomethyl ether; ketones such as acetone and methyl ethyl ketone; ethers such as 1,2-dimethoxyethane, tetrahydrofuran, and dioxane; esters such as ethyl acetate and butyl acetate; cyclic hydrocarbons such as cyclohexane; and acetonitrile.

The liquid medium may be one that can be uniformly dispersed in the dispersion liquid of the silica particles. For example, in a case where the dispersing medium of the dispersion liquid of the silica particles is water, the liquid medium may be ethylene glycol monobutyl ether or the like.

(Metal catalyst)

The anti-fogging agent may further contain a metal catalyst. The metal catalyst functions as a bonding promoting material, and as the anti-fogging agent contains a metal catalyst, an anti-fogging film excellent in moisture resistance and water resistance is more likely to be formed.

The metal catalyst is not particularly limited and can be selected from known metal catalysts. Examples of the metal catalyst include a zirconium compound, a titanium compound, a nickel compound, an aluminum compound, and a tin compound.

Examples of the zirconium compound include zirconium tetrakis(acetylacetonate) and zirconium bis(butoxy) bis(acetylacetonate).

Examples of the titanium compound include titanium tetrakis(acetylacetonate) and titanium bis(butoxy)bis(acetylacetonate).

Examples of the nickel compound include CR12 (manufactured by Momentive Performance Materials Japan

LLC) and $Ni(AcAc)_2$.

Examples of the aluminum compound include aluminum bis(ethylacetoacetate) mono(acetylacetonate), aluminum tris(acetylacetonate), and aluminum ethylacetoacetate diisopropylate.

Examples of the tin compound include dibutyltin diacetate, dibutyltin dilaurate, and dibutyltin dioctiate.

The metal catalyst may contain at least one selected from the group consisting of a zirconium compound, an aluminum compound, and a nickel compound or may contain at least one selected from the group consisting of a zirconium compound and an aluminum compound from the viewpoint of superior water resistance and moisture resistance of the anti-fogging film. As the anti-fogging agent contains at least one selected from the group consisting of a zirconium compound and an aluminum compound as the metal catalyst, bonding sites with the silica particles (for example, colloidal silica) increases and thus stronger bonding is likely to be formed.

The metal catalyst may be a commercially available product. Examples thereof include ZC-150 (manufactured by Matsumoto Fine Chemical Co., Ltd.) as a zirconium compound, TC-310 (manufactured by Matsumoto Fine Chemical Co., Ltd.) as a titanium compound, Al-M (manufactured by Kawaken Fine Chemical Co., Ltd.) as an aluminum compound, and acetylacetonate nickel (II) hydrate (manufactured by Tokyo Chemical Industry Co., Ltd.) as a nickel compound.

The content of the metal catalyst may be 0.01 parts by mass or more, 0.03 parts by mass or more, 0.05 parts by mass or more, or 0.1 parts by mass or more or may be 5.0 parts by mass or less, 3.0 parts by mass or less, 2.0 parts by mass or less, or 1.5 parts by mass or less with respect to 100 parts by mass of the silica particles from the viewpoint of superior moisture resistance and water resistance of the anti-fogging film. The content of the metal catalyst may be 0.01 to 5.0 parts by mass, may be 0.05 to 2.0 parts by mass, or may be 0.1 to 1.5 parts by mass with respect to 100 parts by mass of the silica particles.

The content of the metal catalyst may be 1 part by mass or more, 5 parts by mass or more, or 8 parts by mass or more or may be 30 parts by mass or less, 20 parts by mass or less, or 15 parts by mass or less with respect to 100 parts by mass of the binder compound from the viewpoint of superior water resistance and moisture resistance of the anti-fogging film. The content of the metal catalyst may be 1 to 30 parts by mass or 8 to 15 parts by mass with respect to 100 parts by mass of the binder compound.

The content of the metal catalyst may be 0.1 parts by mass or more, 0.5 parts by mass or more, or 1 part by mass or more or may be 30 parts by mass or less, 25 parts by mass or less, 20 parts by mass or less, 15 parts by mass or less, or 10 parts by mass or less with respect to 100 parts by mass of the synthetic product A from the viewpoint of superior water resistance and moisture resistance of the anti-fogging film. The content of the metal catalyst may be 0.1 to 30 parts by mass or 1 to 20 parts by mass with respect to 100 parts by mass of the synthetic product A.

(Other additives)

The anti-fogging agent of the present embodiment may further include at least one additive selected from the group consisting of an organic phosphoric acid ester having a branched structure and an organic sulfonic acid salt having a branched structure, from the viewpoint of the superior fogging resistance of the anti-fogging film. The organic phosphoric acid ester may have a branched structure in the ester part. The branched structure may be a branched alkyl group.

Examples of the organic phosphoric acid ester having a branched structure include a compound represented by the following General Formula (AD-1).

$$P(=O)(OR^{41})_3 \qquad (AD\text{-}1)$$

In Formula (AD-1), $R^{41}$ represents an organic group having a branched structure. $R^{41}$ may be a branched alkyl group having 1 to 15 carbon atoms. Examples of the compound represented by General Formula (AD-1) include trisethylhexyl phosphate.

Examples of the organic sulfonic acid salt having a branched structure include a compound represented by the following General Formula (AD-2).

$$R^{51}\text{-}S(=O)_2O^- \cdot M^+ \qquad (AD\text{-}2)$$

In Formula (AD-1), $R^{51}$ represents an organic group having a branched structure; and M represents a metal atom such as Na. Examples of the compound represented by General Formula (AD-2) include sulfosuccinic acid diester salts such as sodium di-2-ethylhexylsulfosuccinate; and alkylbenzenesulfonic acid salts such as sodium alkyl (C12-14) benzenesulfonate.

The content of the additive may be 0.1 to 10 parts by mass with respect to 100 parts by mass of the silica particles, from the viewpoint of the superior fogging resistance of the anti-fogging film.

The anti-fogging agent of the present embodiment may further contain acetic acid or a salt thereof. The total content of acetic acid and a salt thereof may be 1 to 50 parts by mass, may be 3 to 30 parts by mass, or may be 5 to 20 parts

by mass with respect to 100 parts by mass of the silica particles from the viewpoints of the pH adjustment of the solution and the properties of the anti-fogging film, such as water resistance.

The anti-fogging agent according to the present embodiment may contain additives such as an antioxidant, an ultraviolet absorber, and a light stabilizer. The anti-fogging agent may contain, in addition to acetic acid, nitric acid, hydrochloric acid, nitric acid, phosphoric acid, sulfuric acid, paratoluenesulfonic acid, benzenesulfonic acid, methanesulfonic acid, phenolsulfonic acid, oxalic acid, maleic acid, malonic acid, tartaric acid, citric acid, malic acid, acetic acid, lactic acid, succinic acid, benzoic acid, ammonia, urea, imidazole, sodium carbonate, calcium carbonate, sodium acetate and the like as a defoaming agent, catalyst and the like that are used during preparation of the raw materials. From the viewpoint of adjusting the viscosity of the anti-fogging agent, the anti-fogging agent may contain a thickener.

The anti-fogging agent (and the hydrophilizing agent to be described later) may be a non-surfactant-based one. The term "non-surfactant-based" means that the content of a surfactant known as a component of an anti-fogging agent is 1% by mass or less based on the total amount of solids in the anti-fogging agent. The anti-fogging agent may not contain a surfactant (the content of the surfactant may be substantially 0 parts by mass based on the total amount of the solids in the anti-fogging agent). Examples of the surfactant include surfactants such as an anionic surfactant, a cationic surfactant, a nonionic surfactant, and an amphoteric surfactant.

<Anti-fogging method for vehicular lamp structure>

The anti-fogging agent according to the present embodiment can be used to prevent fogging of a vehicular lamp structure. The anti-fogging method for a vehicular lamp structure may include, for example, a step of applying the anti-fogging agent to the inner surface of a lens provided in a vehicular lamp structure to form a coating film (application step) and a step of drying the coating film (drying step). The anti-fogging method for a vehicular lamp structure may further include a cleaning step for the purpose of removing any release agent adhered to the surface of the lens prior to the application step.

(Cleaning step)

The cleaning liquid used in the cleaning step is not particularly limited. In a case where the surface substrate in the lens provided in a vehicular lamp structure is a polycarbonate, the cleaning liquid may be any liquid that does not dissolve the polycarbonate substrate. The cleaning liquid may be, for example, water or an alcohol. More specifically, the cleaning liquid may be water, isopropyl alcohol, methanol, or ethanol. The cleaning step may include a step of wiping the substrate with a cloth or the like infiltrated with the cleaning liquid.

(Application step)

The application step is, for example, a step of applying the anti-fogging agent to the inner surface of the lens provided in a vehicular lamp structure. The anti-fogging agent may be applied to the entire inner surface of the lens, or may be selectively applied to a portion of the inner surface of the lens.

The method for applying the anti-fogging agent is not particularly limited, and may be, for example, a spin coating method, a dip coating method, a spray coating method, a flow coating method, a bar coating method, or a gravure coating method. The anti-fogging agent may be infiltrated into a cloth or the like and applied. The method for applying the anti-fogging agent may be a spray coating method from the viewpoint of easily forming a coating film having a uniform thickness on an uneven surface to be treated as well and from the viewpoints of high productivity and high use efficiency of the anti-fogging agent. These methods can be used singly or in combination of two or more kinds.

The amount of the anti-fogging agent to be applied is not limited since the amount depends on the components of the anti-fogging agent, the contents thereof, and the like, but may be, for example, $10^{-9}$ to $10^{3}$ g/m2.

The temperature of the anti-fogging agent used in the application step may be, for example, 1 to 50°C or 10 to 30°C. As the temperature of the anti-fogging agent is 1°C or more, the anti-fogging properties and close contact properties are likely to be further improved. As the temperature of the anti-fogging agent is 50°C or less, the transparency of the anti-fogging film is likely to be improved. The time for treatment with the anti-fogging agent may be, for example, 1 second to 1 hour or 5 to 30 minutes.

(Drying step)

The drying step may be a step of volatilizing the liquid medium from the anti-fogging agent after the anti-fogging agent is applied. The liquid medium can be volatilized by leaving the coated lens at room temperature (for example, 20°C). By carrying out the drying step at a higher temperature, the close contact properties between the inner surface of the lens and the anti-fogging film can be further improved. The temperature in the drying step can be adjusted depending on the

heat resistant temperature of the lens, and may be, for example, 5 to 300°C or 10 to 200°C. As the temperature is 5°C or more, the close contact properties can be further improved. As the temperature is 300°C or less, deterioration due to heat can be further suppressed. The drying time can be set to, for example, 30 seconds to 150 hours. By this step, an anti-fogging film containing silica particles is formed on the inner surface of a lens.

The thickness of the anti-fogging film is not particularly limited, but may be 1 nm to 1000 μm, 5 nm to 10 μm, or 10 nm to 1 μm from the viewpoints of transparency, anti-fogging properties, and the like. The thickness of the anti-fogging film can be measured, for example, using a noncontact film thickness gauge, Optical NanoGauge C13027 (manufactured by HAMAMATSU PHOTONICS K.K.).

The water contact angle of the anti-fogging film can be set to 40° or less with respect to a 1 μL droplet of ultrapure water. From the viewpoint of excellent anti-fogging properties, the water contact angle of the anti-fogging film may be 20° or less or 10° or less with respect to a 1 μL droplet of ultrapure water. The water contact angle of the anti-fogging film can be calculated from the average of values obtained by 10 times of measurement using a contact angle meter.

The visible light transmittance of the anti-fogging film may be 85% or more, 90% or more, or 95% or more. As the visible light transmittance of the anti-fogging film is 85% or more, the brightness of the vehicular lamp can be maintained at a sufficiently high level. The visible light transmittance of the anti-fogging film can be measured, for example, using a U-3500 type recording spectrophotometer (manufactured by Hitachi, Ltd.).

The haze of the anti-fogging film may be 6.0 or less, 3.0 or less, or 1.0 or less. As the haze of the anti-fogging film is 6.0 or less, the brightness of the vehicular lamp can be maintained at a sufficiently high level. The haze of the anti-fogging film can be measured, for example, using a haze meter (NDH2000, manufactured by NIPPON DENSHOKU INDUSTRIES CO., LTD.).

The YI of the anti-fogging film may be 4.0 or less, 3.0 or less, or 1.5 or less. As the YI of the anti-fogging film is 4.0 or less, the brightness of the vehicular lamp can be maintained at a sufficiently high level. The YI of the anti-fogging film can be measured, for example, using a colorimeter (300A, manufactured by NIPPON DENSHOKU INDUSTRIES CO., LTD.).

FIG. 1 is a diagram schematically showing a vehicular lamp structure. The inner surface of the lens of this vehicular lamp structure is subjected to an anti-fogging treatment using the anti-fogging agent according to the present embodiment. That is, the vehicular lamp structure includes an anti-fogging film formed from the anti-fogging agent on the inner surface of the lens. The lamp structure 10 shown in FIG. 1 includes a lamp housing 3 configured to have a recessed shape with one side open, and a lens 1 closing the open side of the lamp housing 3. The material of the lens 1 is, for example, polycarbonate. A lamp chamber S is formed by the lamp housing 3 and the lens 1. In the lamp housing 3, a light source 4 that is disposed in the lamp chamber S is installed. As the light source 4, an incandescent bulb, an LED bulb, a halogen bulb, or the like is employed as appropriate. Inside the lamp chamber S, as shown in the diagram, a reflector 5 that functions as a reflecting plate for the light of the light source 4 may be provided so as to surround the light source 4 from the rear side. On the inner surface of the lens 1, that is, the surface facing the lamp chamber S, an anti-fogging film 2 formed from the above-described anti-fogging agent is provided. The anti-fogging film 2 may be provided over the entire inner surface of the lens 1 or may be provided selectively on a portion as shown in FIG. 1. According to the lamp structure 10, for example, even when a cover or the like made of a rubber material is provided around and/or on the rear side of the light source 4, the anti-fogging film 2 can have sufficient anti-fogging properties over a long time period.

<Hydrophilizing agent>

The anti-fogging agent according to the present embodiment can hydrophilize the surface of a subject to which the anti-fogging agent is applied, and therefore can also be used as a hydrophilizing agent. The hydrophilizing agent may be a treatment agent containing silica particles, a binder compound, and a silane coupling agent that is an acid anhydride or a dicarboxylic acid compound, or may be a treatment agent containing a synthetic product A obtained by reacting a silane coupling agent that is an acid anhydride or a dicarboxylic acid compound with a binder compound; and silica particles. For specific aspects of the hydrophilizing agent, the above description of the anti-fogging agent can be referred to. The anti-fogging agent according to the present embodiment can also be used as a dew condensation preventing agent, a snow accretion preventing agent, an antifouling agent, and the like.

By using a hydrophilizing agent, the substrate surface can be hydrophilized. The hydrophilized surface is less likely to lose its hydrophilicity after a fogging test as well, and is capable of forming a favorable water film when water adheres to the surface. This makes it possible to suppress the occurrence of fogging on the substrate even if the substrate is placed in an environment where the substrate is exposed to volatile components. The hydrophilization treatment of the substrate can be carried out in the same manner as in the anti-fogging method described above.

Examples of the material constituting the substrate include resin materials such as a polycarbonate, an acrylic polymer, a polyamide, a polyacrylate, a polyimide, an acrylonitrile-styrene copolymer, a styreneacrylonitrile-butadiene copolymer, polyvinyl chloride, polyethylene, and a polycarbonate; metal materials such as aluminum, magnesium, copper, zinc, iron, titanium, chromium, manganese, cobalt, and nickel; inorganic materials such as silicon oxide, aluminum oxide, magnesium oxide, copper oxide, zinc oxide, iron oxide, titanium oxide, chromium oxide, manganese oxide, cobalt oxide,

and nickel oxide; and glass. Examples of articles including such a substrate include windshields of vehicles, glasses, goggles, mirrors, storage containers, windows, and camera lenses in addition to the above-described vehicular lamp structure (headlights for automobiles and the like).

The present disclosure relates to, for example, the following [1] to [12].

[1] An anti-fogging agent containing silica particles, a binder compound, and a silane coupling agent that is an acid anhydride or a dicarboxylic acid compound.

[2] The anti-fogging agent according to [1], in which the binder compound is an epoxy compound.

[3] The anti-fogging agent according to [1] or [2], in which the silane coupling agent is a compound represented by the following General Formula (1) or the following General Formula (2).

[Chem. 13]

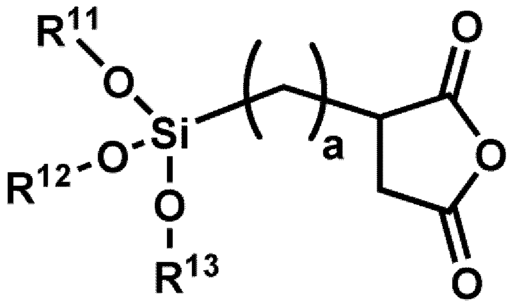

(1)

[In Formula (1), $R^{11}$, $R^{12}$, and $R^{13}$ each independently represent a hydrogen atom or an alkyl group having 1 to 6 carbon atoms, and a represents an integer from 1 to 10.]

[Chem. 14]

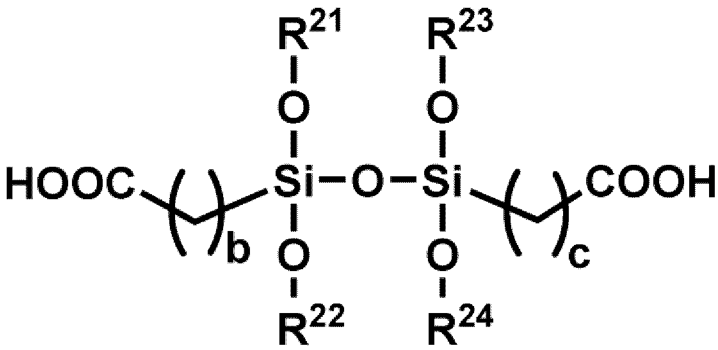

(2)

[In Formula (2), $R^{21}$, $R^{22}$, $R^{23}$, and $R^{24}$ each independently represent a hydrogen atom or an alkyl group having 1 to 6 carbon atoms, and b and c each independently represent an integer from 0 to 10.]

[4] An anti-fogging agent containing a synthetic product A obtained by reacting a silane coupling agent that is an acid anhydride or a dicarboxylic acid compound with a binder compound; and silica particles.

[5] The anti-fogging agent according to [4], in which the binder compound is an epoxy compound, and
the silane coupling agent is a compound represented by the following General Formula (1) or the following General Formula (2).

[Chem. 15]

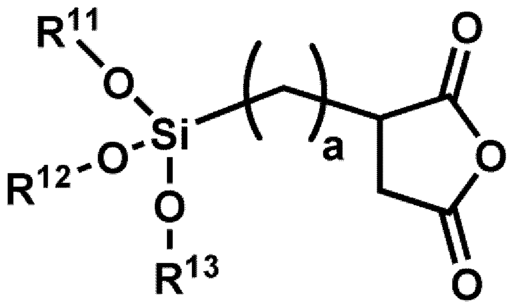

(1)

[In Formula (1), $R^{11}$, $R^{12}$, and $R^{13}$ each independently represent a hydrogen atom or an alkyl group having 1 to 6 carbon atoms, and a represents an integer from 1 to 10.]

[Chem. 16]

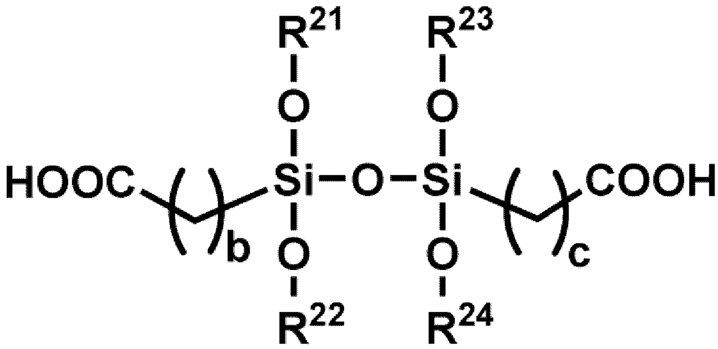

(2)

[In Formula (2), $R^{21}$, $R^{22}$, $R^{23}$, and $R^{24}$ each independently represent a hydrogen atom or an alkyl group having 1 to 6 carbon atoms, and b and c each independently represent an integer from 0 to 10.]

[6] The anti-fogging agent according to [4] or [5], in which the synthetic product A contains a compound represented by the following General Formula (5) or the following General Formula (6).

[Chem. 17]

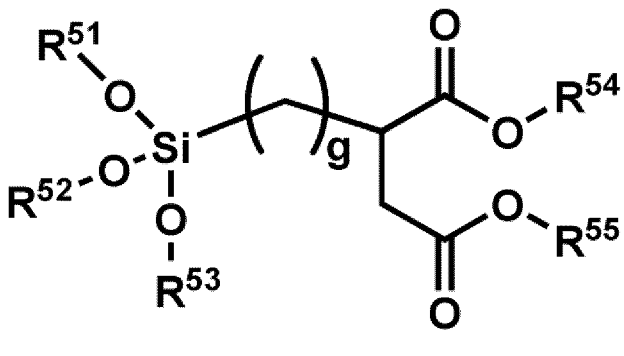

(5)

[In Formula (5), $R^{51}$, $R^{52}$, and $R^{53}$ each independently represent a hydrogen atom or an alkyl group having 1 to 6 carbon atoms, $R^{54}$ and $R^{55}$ each independently represent a hydrogen atom or a monovalent organic group, and g represents an integer from 1 to 10.]

[Chem. 18]

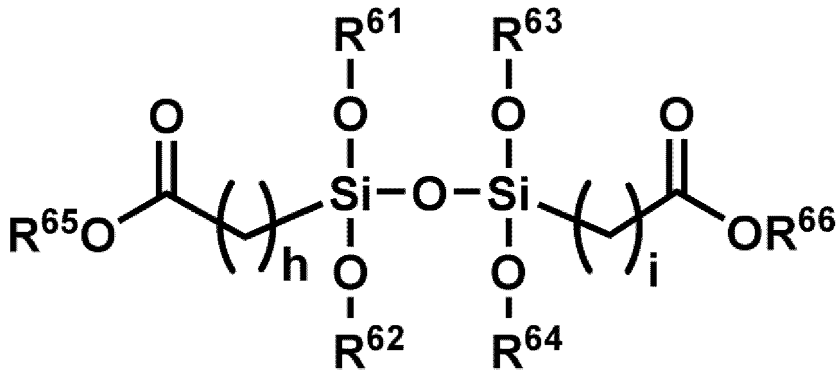

(6)

[In Formula (6), $R^{61}$, $R^{62}$, $R^{63}$, and $R^{64}$ each independently represent a hydrogen atom or an alkyl group having 1 to 6 carbon atoms, $R^{65}$ and $R^{66}$ each independently represent a hydrogen atom or a monovalent organic group, and h and i each independently represent an integer from 0 to 10.]

[7] The anti-fogging agent according to any one of [4] to [6], in which a content of the synthetic product A is 1 to 100 parts by mass with respect to 100 parts by mass of the silica particles.

[8] The anti-fogging agent according to any one of [1] to [7], further containing a silane coupling agent having a polyether group.

[9] The anti-fogging agent according to any one of [1] to [8], further containing a metal catalyst.

[10] The anti-fogging agent according to [9], in which the metal catalyst contains at least one selected from the group consisting of an aluminum compound and a zirconium compound.

[11] An anti-fogging method for a vehicular lamp structure, including:

a step of applying the anti-fogging agent according to any one of [1] to [10] to an inner surface of a lens provided in a vehicular lamp structure to form a coating film; and
a step of drying the coating film.

[12] A vehicular lamp structure including an anti-fogging film formed from the anti-fogging agent according to any one of [1] to [11] on an inner surface of a lens.

Examples

Next, the present disclosure will be described in more detail with reference to the following Examples, but these Examples are not intended to limit the present disclosure.

<Production of synthetic product>

(Synthetic product 1)

Into a reactor, 3.00 g of a silane coupling agent that is an acid anhydride (trade name: X-12-967C, manufactured by Shin-Etsu Chemical Co., Ltd.) and 2-propanol in which 3.00 g of triphenylphosphine (manufactured by Shin-Etsu Chemical Co., Ltd.) was dissolved were each charged, and stirring was performed at 60°C for 1 hour. Next, 6.02 g of an epoxy compound (trade name: EX830, manufactured by Nagase ChemteX Corporation) was added, stirring was continuously performed for about 2 hours in a state where the temperature in the reactor was 60°C, and then cooling to room temperature was performed to obtain a synthetic product 1. The IR charts of the synthetic product 1 before and after synthesis are illustrated in FIGS. 2 to 4. From FIGS. 2 to 4, it has been verified that the synthesis reaction has progressed by the disappearance of peaks at 1780 $cm^{-1}$ and 1850 $cm^{-1}$, which are the peaks attributed to an acid anhydride group, in the IR chart before synthesis, and the decrease in the peak at 910 $cm^{-1}$, which is the peak attributed to an epoxy group. It has been verified that a compound having an ester group has been obtained by the appearance of a peak at 1735 $cm^{-1}$ in the IR chart after synthesis.

(Synthetic product 2)

A synthetic product 2 was obtained in the same manner the synthetic product 1, except that 3.52 g of EX821

(manufactured by Nagase Chemtex Corporation) was used instead of EX830 as an epoxy compound.

(Synthetic product 3)

A synthetic product 3 was obtained in the same manner as the synthetic product 1, except that 8.04 g of EX841 (manufactured by Nagase Chemtex Corporation) was used instead of EX830 as an epoxy compound.

(Synthetic product 4)

Into a reactor, 2.00 g of a silane coupling agent that is a dicarboxylic acid compound (trade name: X-12-1135, NV 30%, manufactured by Shin-Etsu Chemical Co., Ltd.) and 1.37 g of an epoxy compound (trade name: EX830, manufactured by Nagase ChemteX Corporation) were charged, and stirring was continuously performed for about 2 hours in a state where the temperature in the reactor was 60°C, and then cooling to room temperature was performed to obtain a synthetic product 4.

(Synthetic product 5)

Into a reactor, 2.05 g of a silane coupling agent that is an amine compound (trade name: KBM-903, manufactured by Shin-Etsu Chemical Co., Ltd.) and 6.02 g of an epoxy compound (trade name: EX830, manufactured by Nagase ChemteX Corporation) were charged, and stirring was continuously performed for about 2 hours in a state where the temperature in the reactor was 60°C, and then cooling to room temperature was performed to obtain a synthetic product 5.

(Synthetic product 6)

Into a reactor, 8.33 g of a silane coupling agent that is a dicarboxylic acid compound (trade name: X-12-1135, NV 30%, manufactured by Shin-Etsu Chemical Co., Ltd.) and 2.87 g of an epoxy compound (trade name: EX830, manufactured by Nagase ChemteX Corporation) were charged, and stirring was continuously performed for about 3 hours in a state where the temperature in the reactor was 60°C, and then cooling to room temperature was performed to obtain a synthetic product 6.

<Preparation of anti-fogging agent>

(Example 1)

Mixed were 6.67 g of ST-OUP (manufactured by Nissan Chemical Corporation, 15% by mass), which is a water-dispersed silica sol, 1.00 g of a 10% by mass aqueous acetic acid solution, 1.00 g of a 10% by mass IPA solution of a silane coupling agent (trade name: A1230, manufactured by Momentive Performance Materials, Inc.), 0.014 g of a silane coupling agent (trade name: X-12-967C, manufactured by Shin-Etsu Chemical Co., Ltd.), 0.10 g of an epoxy compound (trade name: EX830, manufactured by Nagase ChemteX Corporation), 6.83 g of water, and 1.00 g of a 1% by mass IPA solution of an aluminum metal catalyst (trade name: Al-M, manufactured by Kawaken Fine Chemical Co., Ltd.), and stirring was performed for 2 hours to obtain a mother liquor.

A dilute liquid was prepared by mixing 4.32 g of water, 65.84 g of IPA, and 9.84 g of ethylene glycol monobutyl ether. This dilute liquid was mixed with the mother liquor to obtain a coating liquid.

(Example 2)

A coating liquid was prepared in the same manner as in Example 1, except that 0.047 g of a silane coupling agent (trade name: X-12-1135, NV 30%, manufactured by Shin-Etsu Chemical Co., Ltd.) was used instead of X-12-967C in the preparation of a mother liquor.

(Example 3)

A coating liquid was prepared in the same manner as in Example 1, except that a mother liquor was obtained by mixing 6.67 g of ST-OUP (manufactured by Nissan Chemical Corporation, 15% by mass), which is a water-dispersed silica sol, 1.00 g of a 10% by mass aqueous acetic acid solution, 1.00 g of a 10% by mass IPA solution of a silane coupling agent (trade name: A1230, manufactured by Momentive Performance Materials, Inc.), 1.14 g of a 10% by mass IPA solution of the synthetic product 1, 6.83 g of water, and 1.00 g of a 1% by mass IPA solution of a metal catalyst (trade name: Al-M, manufactured by Kawaken Fine Chemical Co., Ltd.), and performing stirring for 2 hours.

(Example 4)

A coating liquid was obtained in the same manner as in Example 3, except that the amount of a 10% by mass IPA solution of a silane coupling agent (trade name: A1230, manufactured by Momentive Performance Materials, Inc.) blended was changed to 2.00 g and the amount of a 10% by mass dilute solution of the synthetic product 1 blended was changed to 2.50 g in the preparation of a mother liquor.

(Example 5)

A coating liquid was obtained in the same manner as in Example 3, except that the amount of a 10% by mass dilute solution of the synthetic product 1 blended was changed to 4.50 g in the preparation of a mother liquor.

(Example 6)

A coating liquid was obtained in the same manner as in Example 3, except that the amount of a 10% by mass IPA solution of A1230 blended was changed to 3.50 g in the preparation of a mother liquor.

(Example 7)

A coating liquid was obtained in the same manner as in Example 3, except that the amount of a 10% by mass IPA solution of A1230 was blended to 0.50 g and 0.50 g of a 10% by mass dilute solution of the synthetic product 2 was used instead of the synthetic product 1 in the preparation of a mother liquor.

(Example 8)

A coating liquid was obtained in the same manner as in Example 7, except that the amount of a 10% by mass IPA solution of A1230 blended was changed to 3.50 g and the amount of a 10% by mass dilute solution of the synthetic product 2 blended was changed to 4.50 g in the preparation of a mother liquor.

(Example 9)

A coating liquid was obtained in the same manner as in Example 3, except that the amount of a 10% by mass IPA solution of A1230 blended was changed to 0.50 g and 4.50 g of a 10% by mass dilute solution of the synthetic product 3 was used instead of the synthetic product 1 in the preparation of a mother liquor.

(Example 10)

A coating liquid was obtained in the same manner as in Example 9, except that the amount of a 10% by mass IPA solution of A1230 blended was changed to 3.50 g and the amount of a 10% by mass dilute solution of the synthetic product 2 blended was changed to 0.50 g in the preparation of a mother liquor.

(Example 11)

A coating liquid was obtained in the same manner as in Example 3, except that the amount of a 10% by mass IPA solution of A1230 blended was changed to 2.00 g and 2.50 g of a 10% by mass dilute solution of the synthetic product 4 was used instead of the synthetic product 1 in the preparation of a mother liquor.

(Example 12)

Mixed were 6.67 g of ST-OUP (manufactured by Nissan Chemical Corporation, 15% by mass), which is a water-dispersed silica sol, 1.00 g of a 10% by mass aqueous acetic acid solution, 2.00 g of a 10% by mass IPA solution of a silane coupling agent (trade name: A1230, manufactured by Momentive Performance Materials, Inc.), 2.50 g of a 10% by mass IPA solution of the synthetic product 1, 1.00 g of a 1% by mass 2-butanol solution of an aluminum metal catalyst (trade name: Al-M, manufactured by Kawaken Fine Chemical Co., Ltd.), 3.55 g of water, and 5.98 g of IPA, and stirring was performed for 2 hours to obtain a mother liquor.

A dilute liquid was prepared by mixing 2.31 g of water, 13.85 g of IPA, and 3.84 g of ethylene glycol monobutyl ether. This dilute liquid was mixed with the mother liquor to obtain a coating liquid.

(Example 13)

A coating liquid was obtained in the same manner as in Example 12, except that 1.00 g of a 1% by mass 2-butanol solution of zirconium metal catalyst (zirconium acetylacetonate, manufactured by Tokyo Chemical Industry Co., Ltd.) was used instead of a 1% by mass 2-butanol solution of aluminum metal catalyst in the preparation of a mother liquor.

(Example 14)

A coating liquid was obtained in the same manner as in Example 12, except that a mother liquor was obtained by mixing 6.67 g of ST-OUP (manufactured by Nissan Chemical Corporation, 15% by mass), which is a water-dispersed silica sol, 1.00 g of a 10% by mass aqueous acetic acid solution, 2.00 g of a 10% by mass IPA solution of a silane coupling agent (trade name: A1230, manufactured by Momentive Performance Materials, Inc.), 2.50 g of a 10% by mass IPA solution of the synthetic product 6, 1.00 g of a 1% by mass 2-butanol solution of an aluminum metal catalyst (trade name: Al-M, manufactured by Kawaken Fine Chemical Co., Ltd.), 1.31 g of water, and 8.22 g of IPA, and performing stirring for 2 hours.

(Comparative Example 1)

A coating liquid was obtained in the same manner as in Example 3, except that the amount of a 10% by mass IPA solution of A1230 blended was changed to 2.00 g and 2.50 g of a 10% by mass dilute solution of the synthetic product 5 was used instead of the synthetic product 1 in the preparation of a mother liquor.

(Comparative Example 2)

A coating liquid was prepared in the same manner as in Example 1, except that a mother liquor was obtained by mixing 6.67 g of PS-SO (manufactured by Nissan Chemical Corporation, 15% by mass), which is a water-dispersed silica sol, 2.00 g of a 10% by mass IPA solution of a silane coupling agent (trade name: KBM-585A, manufactured by Shin-Etsu Chemical Co., Ltd.), and 6.83 g of water, and performing stirring for 2 hours.

(Comparative Example 3)

A coating liquid was obtained in the same manner as in Example 2, except that X-12-967C was not blended.

<Formation of anti-fogging film on polycarbonate substrate>

A polycarbonate substrate measuring 10 cm square and 2 mm thick was washed with isopropyl alcohol. The coating liquid obtained in each example was applied to the substrate using an applicator and heated at 110°C for 30 minutes to obtain a polycarbonate substrate with an anti-fogging film having a thickness of 100 to 1000 nm as a sample material.

<Evaluation>

The sample materials were subjected to the following evaluations. The results are shown in Tables 1 to 4.

(Breath test)

In a laboratory having a room temperature of 25°C, breath was blown onto the anti-fogging film of the sample material from a position 5 cm away, and the presence or absence of fogging was visually observed. The case where no fogging occurred was rated as "A", and the case where fogging occurred was rated as "B".

(Anti-fogging index)

Using the apparatus illustrated in FIG. 5, images for anti-fogging property evaluation and reference images were obtained under the following photographing conditions. The anti-fogging index AFI was calculated using the obtained images for evaluation and reference images by the calculation method shown below.

[Imaging conditions]

Sample image: Checkerboard pattern of black and white squares, square side length 0.5 mm
Water temperature: 40°C
Distance D1: 1.5 cm
Depth D2: 1 cm
Distance D3: 17 cm (distance from the sample image to the central surface of the front lens)
Digital camera: Canon PowerShot SX70 HS (focal length in 35 mm film equivalent: 15 mm, saved image: size 1824 × 1824 pixels, saved format jpg), the image was captured so as to contain 4900 squares in a 1824 × 1824 pixel image.
Image for anti-fogging property evaluation: Photographed 10 seconds after the sample material was disposed.
Reference images: Photographed immediately (0 seconds after disposition) (image O) and 10 seconds (image N) after a polycarbonate substrate not treated with an anti-fogging agent was disposed.
Compression method: Resized to 820 × 820 pixels and output at a compressibility of 20%.

[Calculation of anti-fogging index AFI]

The anti-fogging index AFI was calculated from the file capacity S1 when the image for anti-fogging property evaluation was compressed by the compression method, the file capacity S2 when the image N was compressed by the compression method, and the file capacity S0 when the image O was compressed by the compression method by the following equation.

$$AFI = (S1 - S2) \times 10/(S0 - S2)$$

(Water film uniformity index)

Using the apparatus illustrated in FIG. 5, images for evaluation and reference images were obtained under the following photographing conditions. The obtained images for evaluation and reference images were subjected to the image processing described below to calculate the water film uniformity index WE.

[Imaging conditions]

Sample image: Checkerboard pattern of black and white squares, square side length 0.5 mm
Water temperature: 40°C
Distance D1: 1.5 cm
Depth D2: 1 cm
Distance D3: 17 cm (distance from the sample image to the central surface of the front lens)
Digital camera: Canon PowerShot SX70 HS (focal length in 35 mm film equivalent: 15 mm, saved image: size 1824 × 1824 pixels, saved format jpg), the image was captured so as to contain 4900 squares in a 1824 × 1824 pixel image.
Image for anti-fogging property evaluation: Photographed 40 seconds after the sample material was disposed.
Reference image: Photographed immediately after a polycarbonate substrate not treated with an anti-fogging agent was disposed (0 seconds after disposition).

[Image processing]

(1) Using image processing software (ImageJ), the image for evaluation and the reference image are read and converted to 8 bits (Image -> type -> 8 bits).
(2) The boundary threshold is set to "90 to 255" (Image -> Adjust -> Threshold -> Set to "90 to 255" -> apply).
(3) Binarized (Process -> Binary -> Make Binary).
(4) The "Area" is set as the measurement condition (Analyze -> Set Measurements -> Check Area).
(5) Using particle analysis, the area of one pixel square or more is calculated (Analyze -> Analyze Particles -> set "Size" to "1-Infinity", set "Show" to "Outlines", check "Display results" and "Clear Results", and click OK).
(6) From the information about the reference image in (5), a frequency distribution is created in 20 pixel increments in the range of 0 to 1000 pixels as an area distribution, and an area range RA where the frequency is 5% or more of the total frequency is acquired.

(7) From the information about the image for evaluation in (5), a frequency distribution is created in 20 pixel increments in the range of 0 to 1000 pixels as an area distribution, the proportion (%) of the number of particles (frequency) included in the area range in (6) with respect to the total number of particles (sum of frequency) is calculated, and this is taken as the water film uniformity index WE.

(Water resistance)

The sample material was immersed in pure water, placed in a thermostatic chamber at 40°C, and held for 120 hours. The sample material was then left to stand at room temperature for 1 day, and steam generated from a water bath at 40°C was applied to the anti-fogging film of the sample material for 10 seconds at a distance of 1.5 cm from the water surface to the sample material. The presence or absence of fogging after 10 seconds was visually examined and evaluated according to the following criteria.

Rating A: The entire surface is not fogged (fogged area with respect to the total surface area of the sample material is less than 5%)
Rating B: The surface is partly fogged (fogged area with respect to the total area of the sample material is 5% or more and less than 20%)
Rating C: The surface is fogged overall (fogged area with respect to the total area of the sample material is 20% or more and less than 50%)
Rating D: The entire surface is fogged (fogged area with respect to the total area of the sample material is 50% or more)

(Moisture resistance)

The sample material was placed in a thermostatic chamber at 50°C and held at a humidity of 95% for 120 hours. The sample material was then left to stand at room temperature for 1 day, and steam generated from a water bath at 40°C was applied to the anti-fogging film of the sample material for 10 seconds at a distance of 1.5 cm from the water surface to the sample material. The presence or absence of fogging after 10 seconds was visually examined and evaluated in the same manner as in the water resistance test.

(Fogging properties)

In conformity with the provisions of ISO 6452: 2007, a test apparatus 20 illustrated in FIG. 6 was assembled and a test was performed by the following procedure.

(i) A cut-out rubber cover 12 (one piece with a size of 1 cm × 1 cm × 2 mm) is placed on the bottom of a test tube 11, the opening of the test tube 11 is covered with a sample material 13 (the sample material 13 is disposed so that the surface provided with the anti-fogging film faces the opening side), and fixed with tape 14 so that the sample material 13 does not come off.
(ii) The test tube 11 is disposed in an oil bath 15, which is a heat medium, so that the rubber cover 12 is below the oil level, and heated at 180°C for 2 hours.
(iii) After heating, the oil bath is left to cool to room temperature, and the sample material 13 is removed.

The sample material was then left to stand at room temperature for 1 day, and steam generated from a water bath at 40°C was applied to the anti-fogging film of the sample material for 20 seconds at a distance of 1.5 cm from the water surface to the sample material. The presence or absence of fogging after 20 seconds was visually examined and evaluated in the same manner as in the water resistance test.

[Table 1]

| | | Example 1 | Example 2 |
|---|---|---|---|
| Silica particles | ST-OUP | 100 | 100 |
| Silane coupling agent | A1230 | 10 | 10 |
| | X-12-967C | 1.4 | - |
| | X-12-1135 | - | 1.4 |
| Binder compound | EX830 | 10 | 10 |
| Acetic acid | AcOH | 10 | 10 |

(continued)

| | | Example 1 | Example 2 |
|---|---|---|---|
| Metal catalyst | Al-M | 1 | 1 |
| Evaluation | Breath test | A | A |
| | AFI | 9.8 | 9.8 |
| | WE | 100% | 100% |
| | Water resistance | B | B |
| | Moisture resistance | B | B |
| | Fogging properties | B | B |

[Table 2]

| | | Example 3 | Example 4 | Example 5 | Example 6 | Example 7 | Example 8 | Example 9 | Example 10 | Example 11 |
|---|---|---|---|---|---|---|---|---|---|---|
| Silica particles | ST-OUP | 100 | 100 | 100 | 100 | 100 | 100 | 100 | 100 | 100 |
| Silane coupling agent | A1230 | 10 | 20 | 20 | 35 | 5 | 35 | 5 | 35 | 20 |
| Synthetic product | 1 | 11.4 | 25 | 45 | 20 | - | - | - | - | - |
| | 2 | - | - | - | - | 5 | 45 | - | - | - |
| | 3 | - | - | - | - | - | - | 45 | 5 | - |
| | 4 | - | - | - | - | - | - | - | - | 25 |
| Acetic acid | AcOH | 10 | 10 | 10 | 10 | 10 | 10 | 10 | 10 | 10 |
| Metal catalyst | Al-M | 1 | 1 | 1 | 1 | 1 | 1 | 1 | 1 | 1 |
| Evaluation | Breath test | A | A | A | A | A | A | A | A | A |
| | AFI | 9.8 | 9.8 | 9.9 | 9.8 | 9.8 | 9.7 | 9.7 | 9.7 | 9.6 |
| | WE | 100% | 100% | 99% | 100% | 99% | 100% | 100% | 100% | 100% |
| | Water resistance | B | A | A | A | A | A | A | A | A |
| | Moisture resistance | B | A | A | A | A | A | A | A | A |
| | Fogging properties | B | B | B | B | B | B | B | B | B |

[Table 3]

| | | Comparative Example 1 | Comparative Example 2 | Comparative Example 3 |
|---|---|---|---|---|
| Silica particles | ST-OUP | 100 | - | 100 |
| | PS-SO | - | 100 | - |
| Silane coupling agent | A1230 | 20 | - | 10 |
| | KBE-585A | - | 20 | - |
| Synthetic product | 5 | 25 | - | - |
| Acetic acid | AcOH | 10 | - | 10 |
| Metal catalyst | Al-M | 1 | - | 1 |
| Evaluation | Breath test | B | A | A |
| | AFI | 9.8 | 9.0 | 9.9 |
| | WE | 86% | 98% | 98% |
| | Water resistance | D | D | C |
| | Moisture resistance | D | D | C |
| | Fogging properties | D | D | B |

[Table 4]

| | | Example 12 | Example 13 | Example 14 |
|---|---|---|---|---|
| Silica particles | ST-OUP | 100 | 100 | 100 |
| Silane coupling agent | A1230 | 20 | 20 | 20 |
| Synthetic product | 1 | 25 | 25 | - |
| | 6 | - | - | 25 |
| Acetic acid | AcOH | 10 | 10 | 10 |
| Metal catalyst | Al-M | 1 | - | 1 |
| | Zr(acac)4 | - | 1 | - |
| Evaluation | AFI | 9.8 | 9.6 | 9.5 |
| | WE | 100% | 99% | 97% |
| | Water resistance | A | A | A |
| | Moisture resistance | A | A | A |
| | Fogging properties | B | B | B |

**Reference Signs List**

1: lens, 2: anti-fogging film, 3: lamp housing, 4: light source, 5: reflector, S: lamp chamber, 10: lamp structure, 11: test tube, 12: rubber cover, 13: sample material, 14: tape, 15: oil bath, 20: test apparatus, 30: sample image, 40: digital camera, 50: sample material, 60: water.

## Claims

1. An anti-fogging agent comprising: silica particles; a binder compound; and a silane coupling agent that is an acid anhydride or a dicarboxylic acid compound.

2. The anti-fogging agent according to claim 1, wherein the binder compound is an epoxy compound.

3. The anti-fogging agent according to claim 1, wherein the silane coupling agent is a compound represented by the following General Formula (1) or the following General Formula (2).

[Chem. 1]

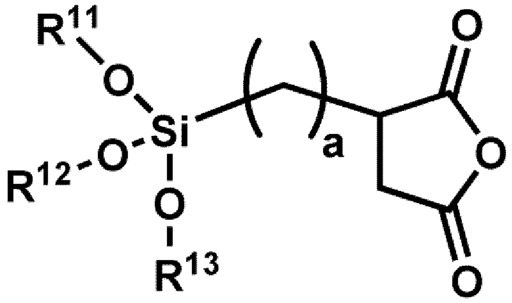

(1)

[In Formula (1), $R^{11}$, $R^{12}$, and $R^{13}$ each independently represent a hydrogen atom or an alkyl group having 1 to 6 carbon atoms, and a represents an integer from 1 to 10.]

[Chem. 2]

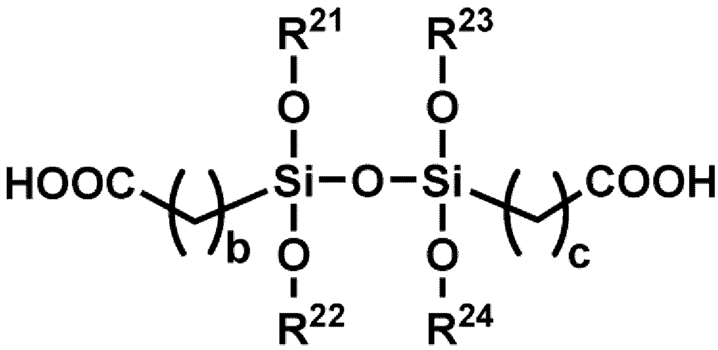

(2)

[In Formula (2), $R^{21}$, $R^{22}$, $R^{23}$, and $R^{24}$ each independently represent a hydrogen atom or an alkyl group having 1 to 6 carbon atoms, and b and c each independently represent an integer from 0 to 10.]

4. An anti-fogging agent comprising: a synthetic product A obtained by reacting a silane coupling agent that is an acid anhydride or a dicarboxylic acid compound with a binder compound; and silica particles.

5. The anti-fogging agent according to claim 4, wherein the binder compound is an epoxy compound, and the silane coupling agent is a compound represented by the following General Formula (1) or the following General Formula (2).

[Chem. 3]

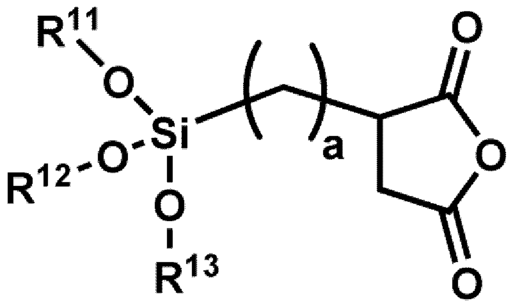

(1)

[In Formula (1), $R^{11}$, $R^{12}$, and $R^{13}$ each independently represent a hydrogen atom or an alkyl group having 1 to 6 carbon atoms, and a represents an integer from 1 to 10.]

[Chem. 4]

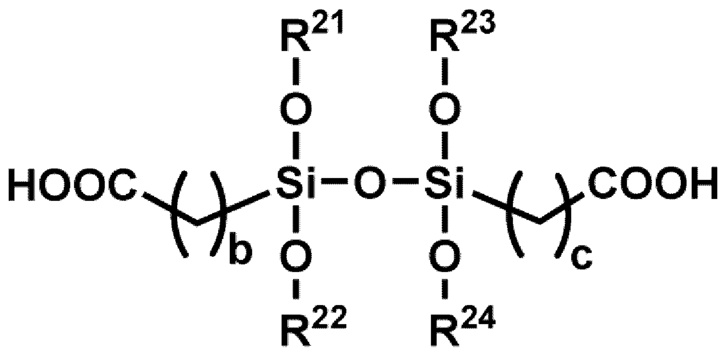

(2)

[In Formula (2), $R^{21}$, $R^{22}$, $R^{23}$, and $R^{24}$ each independently represent a hydrogen atom or an alkyl group having 1 to 6 carbon atoms, and b and c each independently represent an integer from 0 to 10.]

**6.** The anti-fogging agent according to claim 4, wherein the synthetic product A comprises a compound represented by the following General Formula (5) or the following General Formula (6).

[Chem. 5]

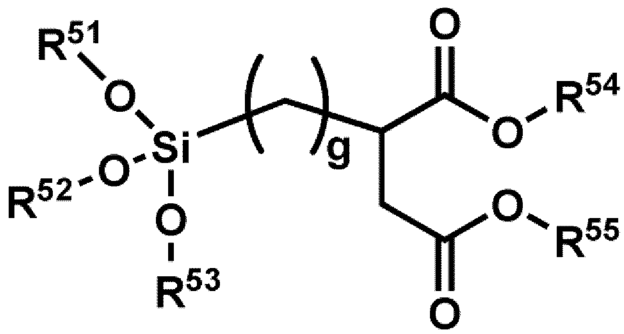

(5)

[In Formula (5), $R^{51}$, $R^{52}$, and $R^{53}$ each independently represent a hydrogen atom or an alkyl group having 1 to 6 carbon atoms, $R^{54}$ and $R^{55}$ each independently represent a hydrogen atom or a monovalent organic group, and g represents an integer from 1 to 10.]

[Chem. 6]

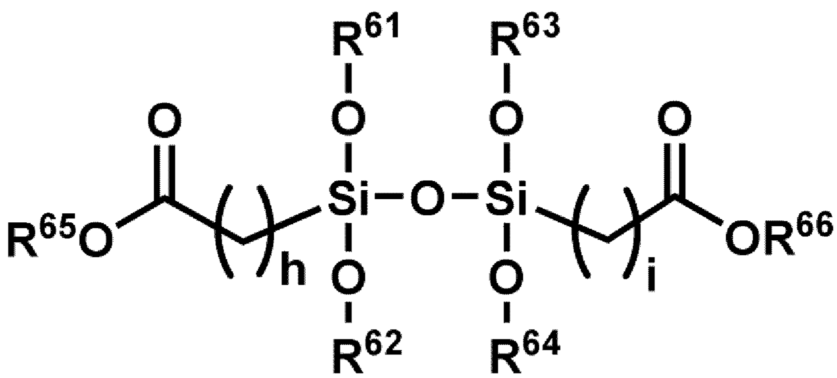

(6)

[In Formula (6), $R^{61}$, $R^{62}$, $R^{63}$, and $R^{64}$ each independently represent a hydrogen atom or an alkyl group having 1 to 6 carbon atoms, $R^{65}$ and $R^{66}$ each independently represent a hydrogen atom or a monovalent organic group, and h and i each independently represent an integer from 0 to 10.]

**7.** The anti-fogging agent according to claim 4, wherein a content of the synthetic product A is 1 to 100 parts by mass with respect to 100 parts by mass of the silica particles.

**8.** The anti-fogging agent according to any one of claims 1 to 7, further comprising a silane coupling agent having a polyether group.

**9.** The anti-fogging agent according to any one of claims 1 to 7, further comprising a metal catalyst.

**10.** The anti-fogging agent according to claim 9, wherein the metal catalyst comprises at least one selected from the group consisting of an aluminum compound and a zirconium compound.

**11.** An anti-fogging method for a vehicular lamp structure, comprising:

a step of applying the anti-fogging agent according to any one of claims 1 to 7 to an inner surface of a lens provided in a vehicular lamp structure to form a coating film; and
a step of drying the coating film.

**12.** A vehicular lamp structure comprising an anti-fogging film formed from the anti-fogging agent according to any one of claims 1 to 7 on an inner surface of a lens.

*Fig.1*

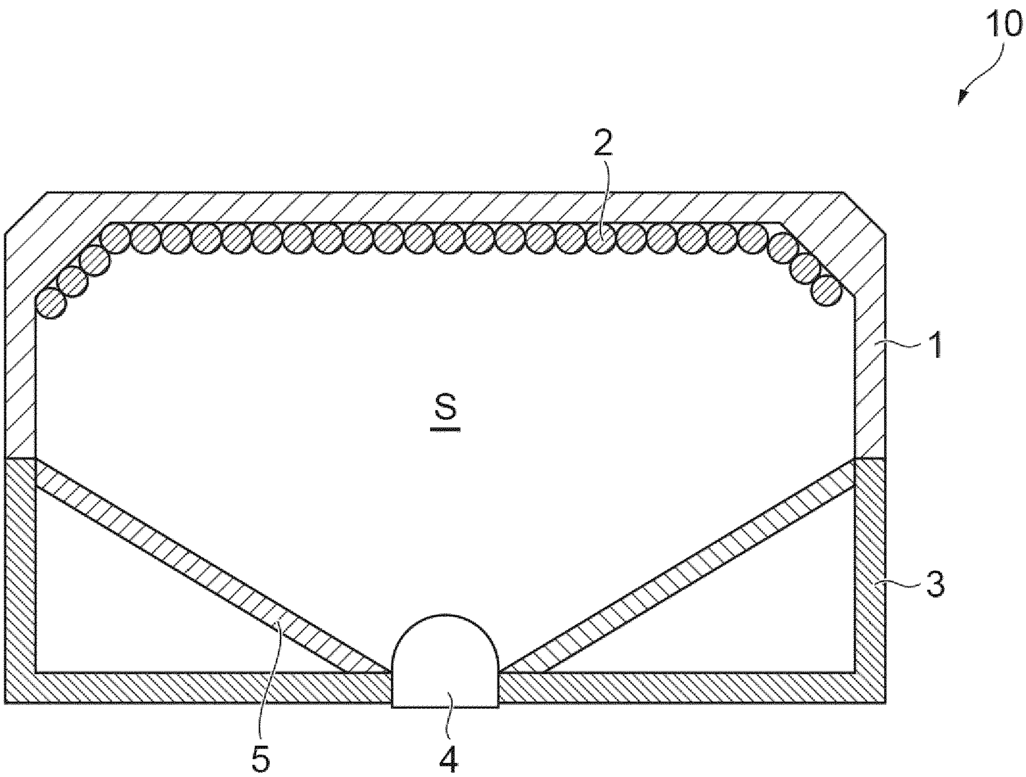

Fig.2

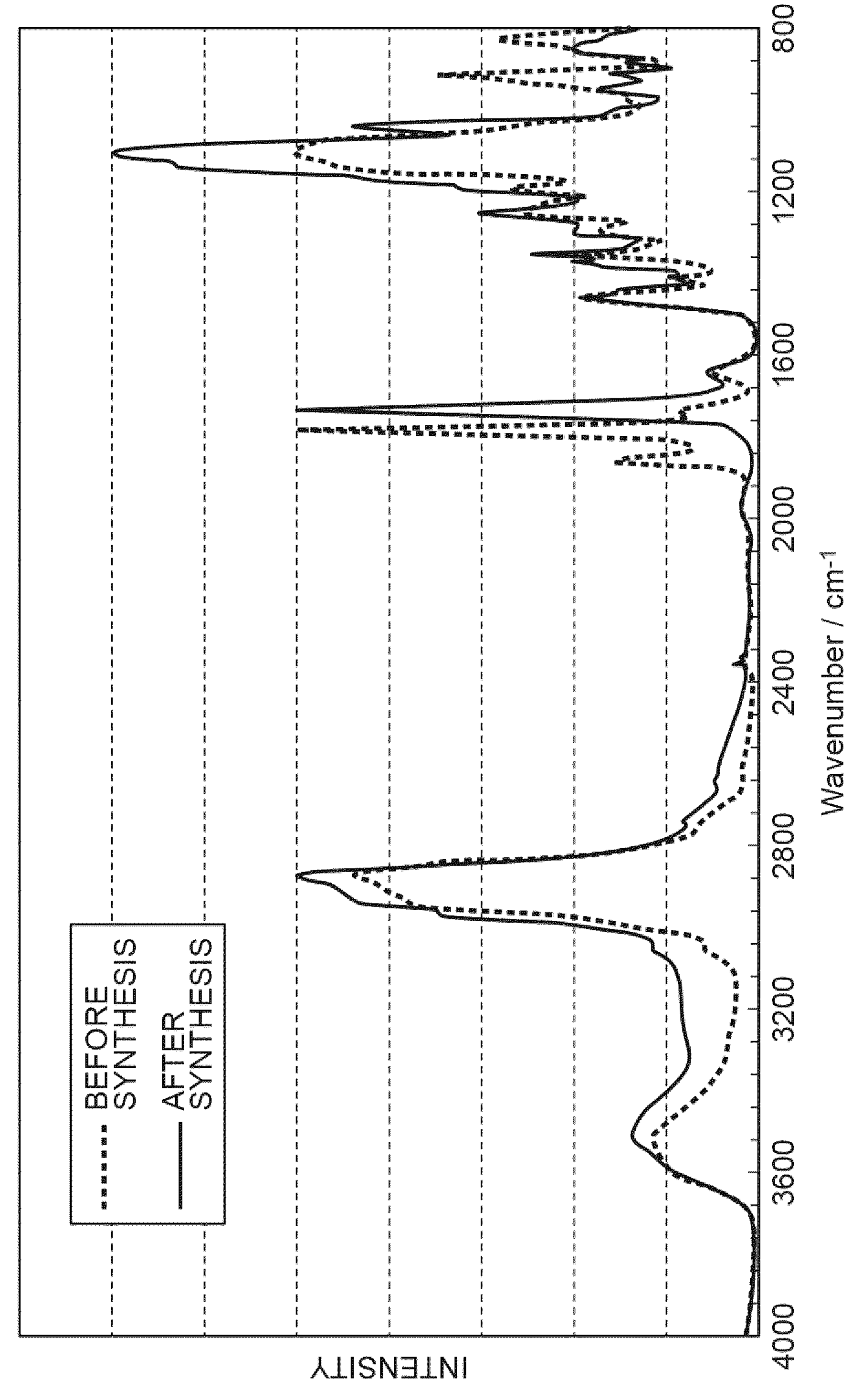
BEFORE SYNTHESIS
AFTER SYNTHESIS
INTENSITY
Wavenumber / cm-1
4000
3600
3200
2800
2400
2000
1600
1200
800

Fig.3

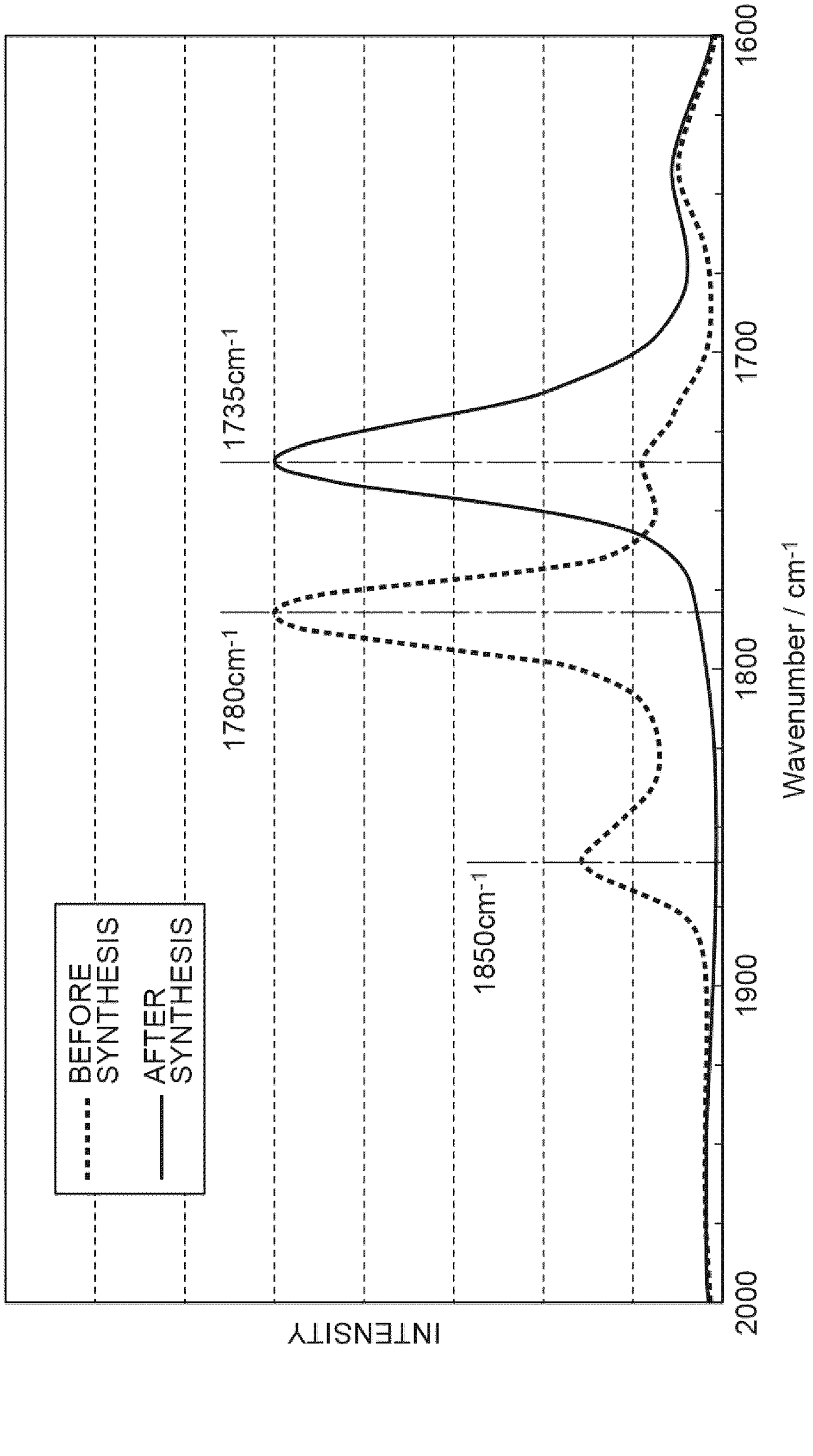
BEFORE SYNTHESIS
AFTER SYNTHESIS
1850cm-1
1780cm-1
1735cm-1
INTENSITY
2000
1900
1800
1700
1600
Wavenumber / cm-1

Fig.4

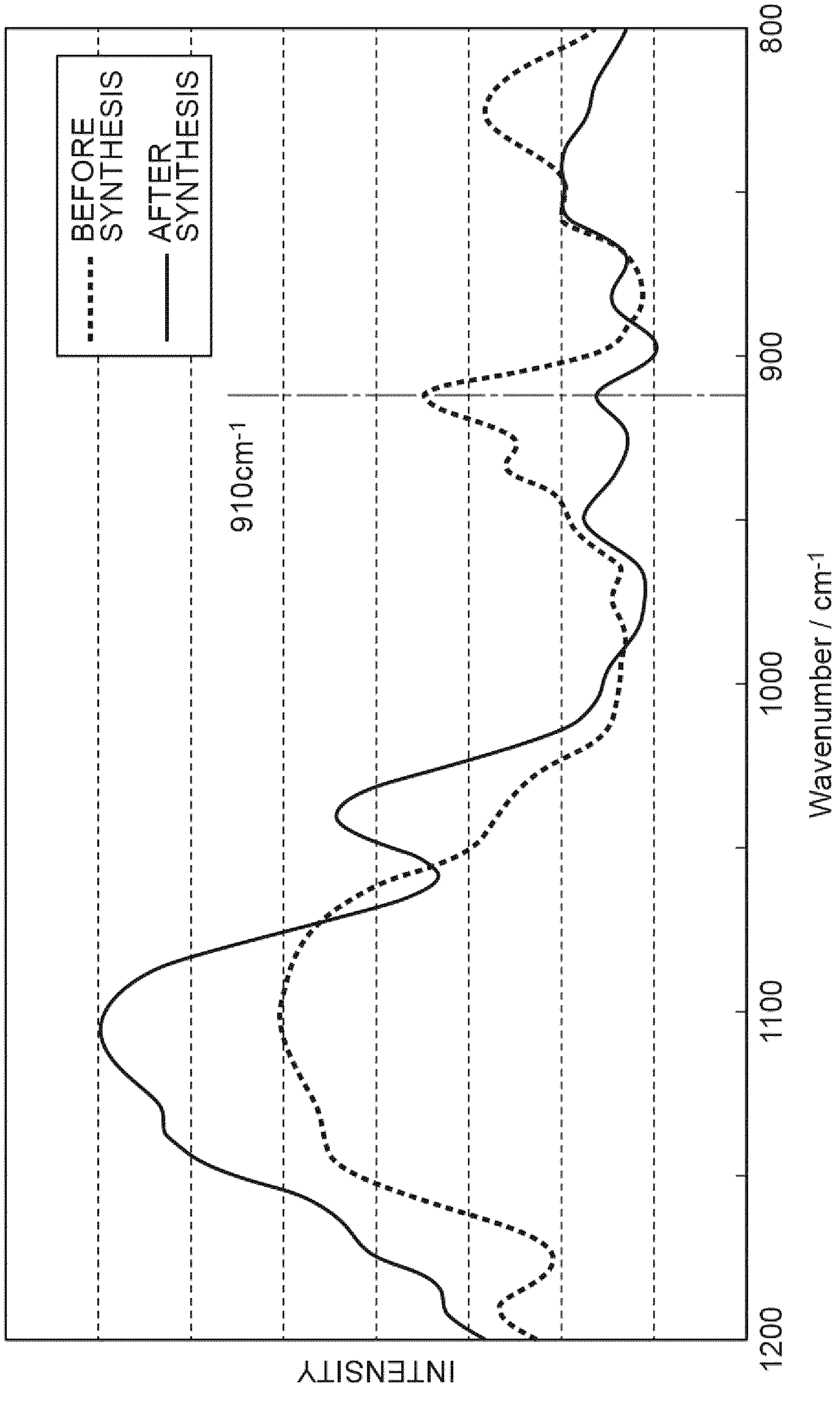
BEFORE SYNTHESIS
AFTER SYNTHESIS
910cm-1
INTENSITY
1200
1100
1000
900
800
Wavenumber / cm-1

# Fig.5

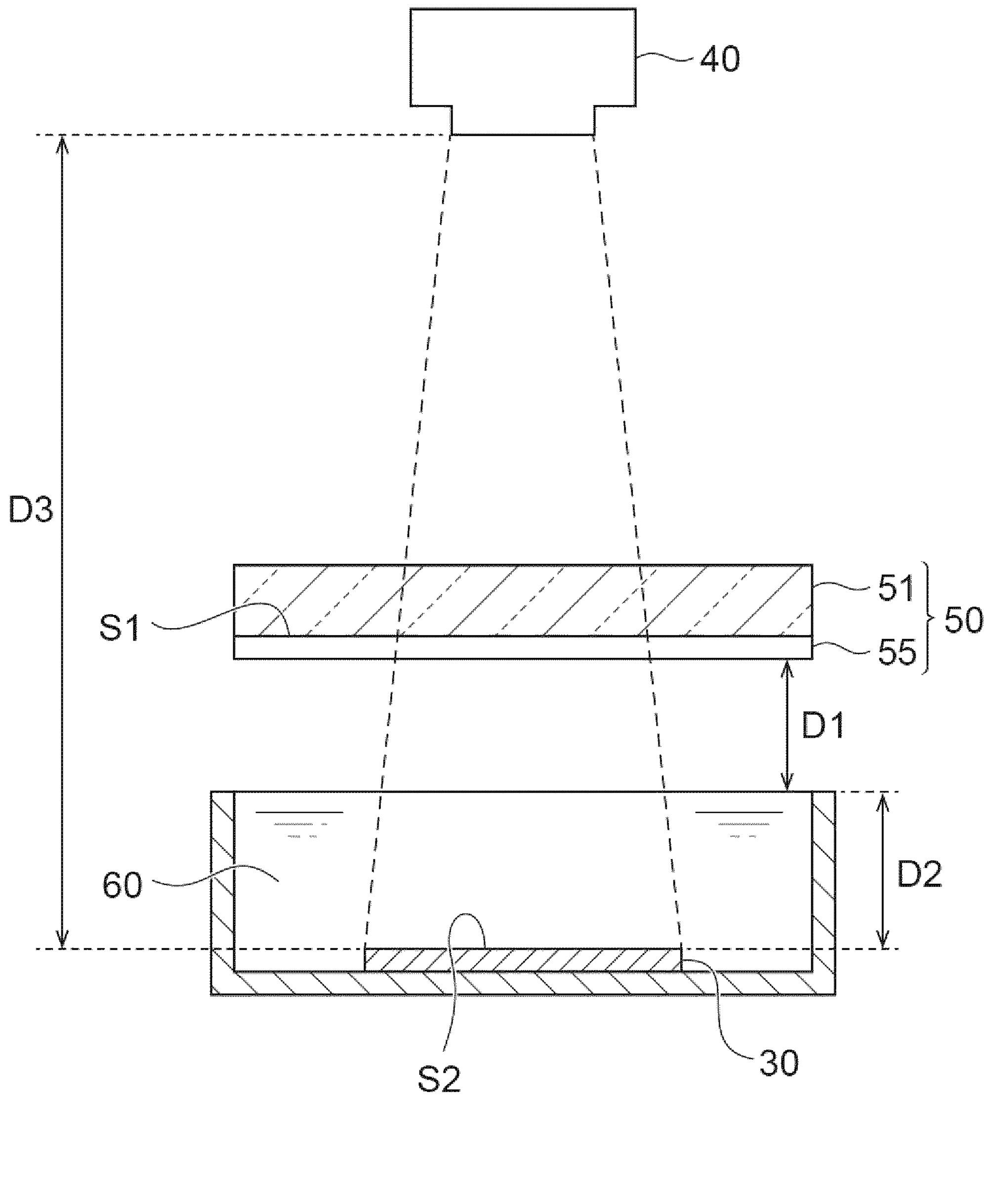

Fig.6

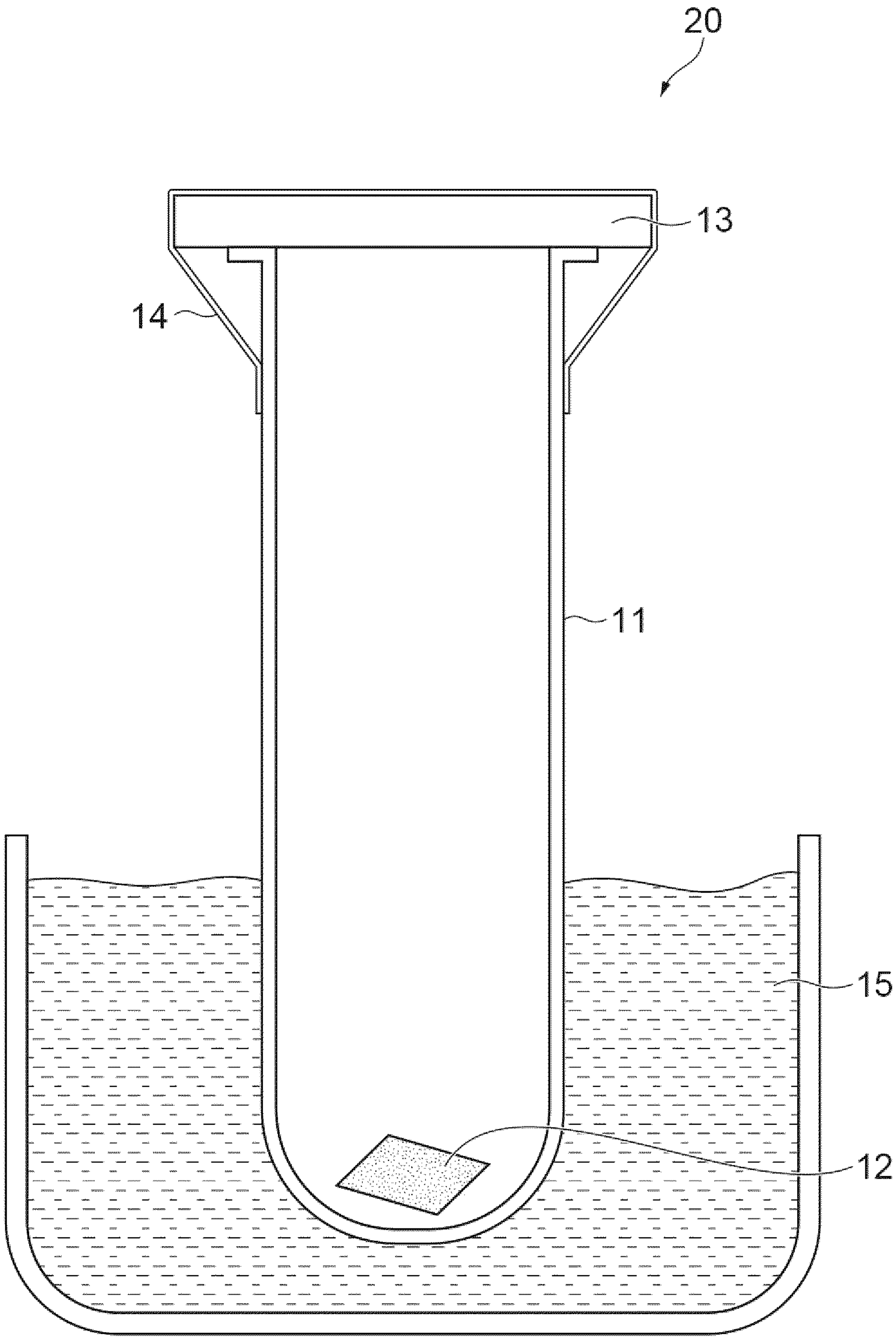

**INTERNATIONAL SEARCH REPORT**

International application No.
**PCT/JP2022/032654**

**A. CLASSIFICATION OF SUBJECT MATTER**

***C09D 163/00***(2006.01)i; ***C09D 201/00***(2006.01)i; ***C09D 7/61***(2018.01)i; ***C09D 7/63***(2018.01)i; ***C09K 3/00***(2006.01)i
FI: C09K3/00 R; C09D201/00; C09D7/61; C09D7/63; C09D163/00

According to International Patent Classification (IPC) or to both national classification and IPC

**B. FIELDS SEARCHED**

Minimum documentation searched (classification system followed by classification symbols)

C09D163/00; C09D201/00; C09K3/00; C09D7/61; C09D7/63

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2021-91859 A (KRI INC) 17 June 2021 (2021-06-17)<br>claims, paragraphs [0071]-[0103], example 11, etc. | 1-12 |
| X<br>Y | WO 2015/186360 A1 (NIPPON SHEET GLASS COMPANY, LIMITED) 10 December 2015 (2015-12-10)<br>claims, paragraphs [0015]-[0017], [0051], [0080]-[0107], example A8, etc. | 1-7, 11-12<br>8-10 |
| Y | WO 2016/140146 A1 (THREE BOND CO., LTD.) 09 September 2016 (2016-09-09)<br>claims, paragraphs [0041], [0048]-[0070], example 17, etc. | 1-12 |
| Y | JP 2021-37636 A (FUJIFILM CORP) 11 March 2021 (2021-03-11)<br>paragraphs [0095]-[0097], examples, etc. | 1-12 |
| Y | WO 2011/090156 A1 (CENTRAL GLASS COMPANY, LIMITED) 28 July 2011 (2011-07-28)<br>claims, examples | 1-12 |
| Y | WO 2013/073586 A1 (DAIWA CAN COMPANY) 23 May 2013 (2013-05-23)<br>paragraphs [0022]-[0023], examples, etc. | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 October 2022** | **08 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/032654**

**C. DOCUMENTS CONSIDERED TO BE RELEVANT**

| Category* | Citation of document, with indication, where appropriate, of the relevant passages | Relevant to claim No. |
|---|---|---|
| A | WO 2021/141129 A1 (SHOWA DENKO MAT CO LTD) 15 July 2021 (2021-07-15) claims, examples, etc. | 1-12 |
| A | JP 2015-34097 A (SHIN-ETSU CHEMICAL CO., LTD.) 19 February 2015 (2015-02-19) claims, examples, etc. | 1-12 |

Form PCT/ISA/210 (second sheet) (January 2015)

**INTERNATIONAL SEARCH REPORT**
**Information on patent family members**

International application No.
**PCT/JP2022/032654**

| Patent document cited in search report | Publication date (day/month/year) | Patent family member(s) | Publication date (day/month/year) |
|---|---|---|---|
| JP 2021-91859 A | 17 June 2021 | (Family: none) | |
| WO 2015/186360 A1 | 10 December 2015 | US 2017/0096574 A1<br>claims, paragraphs [0019]-[0022], [0068], [0106]-[0159], example A8, etc.<br>EP 3156227 A1 | |
| WO 2016/140146 A1 | 09 September 2016 | (Family: none) | |
| JP 2021-37636 A | 11 March 2021 | (Family: none) | |
| WO 2011/090156 A1 | 28 July 2011 | (Family: none) | |
| WO 2013/073586 A1 | 23 May 2013 | (Family: none) | |
| WO 2021/141129 A1 | 15 July 2021 | TW 202134395 A | |
| JP 2015-34097 A | 19 February 2015 | US 2015/0044466 A1<br>claims, examples, etc.<br>EP 2876136 A1<br>CN 104342924 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016027134 A